# EUROPÄISCHE PATENTSCHRIFT

(11) **EP 3 757 041 B1**
(45) Veröffentlichungstag und Bekanntmachung des Hinweises auf die Patenterteilung: **09.11.2022**
(21) Anmeldenummer: 20182428.1
(22) Anmeldetag: 26.06.2020
(51) Int. Cl.: B65G 37/02, B65G 54/02, H02K 11/33, H02K 41/03, F16C 32/04, G05B 19/19

(54) **VERFAHREN ZUM KONFIGURIEREN EINES PLANARANTRIEBSSYSTEMS**
METHOD FOR CONFIGURING A PLANAR DRIVE SYSTEM
PROCÉDÉ DE CONFIGURATION D'UN SYSTÈME D'ENTRAÎNEMENT PLANAIRE

(30) Priorität: 27.06.2019 DE 102019117424
(43) Veröffentlichungstag der Anmeldung: 30.12.2020
(73) Patentinhaber: Beckhoff Automation GmbH, 33415 Verl (DE)
(72) Erfinder: PRÜSSMEIER, Uwe, 32657 Lemgo (DE); LUTHE, Thomas, 33415 Verl (DE); WEBER, Tobias, 33332 Gütersloh (DE); JURKE, Benjamin, 33332 Gütersloh (DE)
(74) Vertreter: Patentanwaltskanzlei WILHELM & BECK

(56) Entgegenhaltungen:
- DE-A1-102009 008 529
- US-A1- 2016 234 095
- N N: "Flying Motion XPlanar", , 1. November 2018 (2018-11-01), Seiten 1-28, XP055668904, Gefunden im Internet: URL:https://download.beckhoff.com/download /Document/catalog/Beckhoff_XPlanar_d.pdf [gefunden am 2020-02-14]
- J. M. M. ROVERS ET AL: "Multiphysical analysis of moving-magnet planar motor topologies", IEEE TRANSACTIONS ON MAGNETICS, Bd. 49, Nr. 12, 1. Dezember 2013 (2013-12-01), Seiten 5730-5741, XP055740761, NEW YORK, NY, US ISSN: 0018-9464, DOI: 10.1109/TMAG.2013.2273060

## Beschreibung

Die Erfindung betrifft ein Verfahren zum Konfigurieren eines Planarantriebssystems, eine Steuereinheit, ein Computerprogramm und ein Planarantriebssystem.

Diese Patentanmeldung beansprucht die Priorität der deutschen Patentanmeldung DE 10 2019 117 424.4 vom 27. Juni 2019.

Planarantriebssysteme können unter anderem in der Automatisierungstechnik, insbesondere der Fertigungstechnik, der Handhabungstechnik und der Verfahrenstechnik eingesetzt werden. Mittels Planarantriebssystemen kann ein bewegliches Element einer Anlage oder Maschine in mindestens zwei linear unabhängigen Richtungen bewegt, positioniert und orientiert werden. Planarantriebssysteme können einen permanenterregten elektromagnetischen Planarmotor mit einem planaren Stator und einem auf dem Stator in mindestens zwei Richtungen beweglichen Läufer umfassen.

In der deutschen Patentanmeldung DE 10 2017 131 304.4 vom 27. Dezember 2017, veröffentlicht als DE 10 2017 131 304 A1, ist ein Planarantriebssystem offenbart, bei dem ein Läufer über mehrere nebeneinander angeordnete Statormodule bewegt werden kann. Antriebsmagnetfelder werden mittels Leiterstreifen in den Statormodulen erzeugt und wechselwirken mit Permanentmagneten im Läufer derart, dass der Läufer schwebend über den Statormodulen gehalten beziehungsweise durch ein magnetisches Wanderfeld, welches auch als Wandermagnetfeld bezeichnet werden kann, angetrieben werden kann. Das Wanderfeld kann dabei über den Rand eines Statormodule hinweg übergehend auf ein angrenzendes Statormodul erzeugt werden. Eine Position des Läufers kann mittels Magnetfeldsensoren in den Statormodulen, mit denen das Permanentmagnetfeld des Läufers ausgewertet werden kann, ermittelt werden.

Um das Wandermagnetfeld über den Rand des Statormoduls hinweg übergehend auf das angrenzende Statormodul zu erzeugen, muss die Position der beiden Statormodule zueinander bekannt sein, wobei die Position unter anderem die Lage und die Orientierung der angrenzenden Statormodule zueinander umfasst. In einem Planarantriebssystem kann beispielsweise eine manuelle Konfiguration vorgenommen werden, bei der für jedes Statormodul eine Position innerhalb des Planarantriebssystems manuell erfasst und in einem Speicher abgelegt wird. Anhand dieser manuell erfassten Positionen kann dann das Wanderfeld über die Ränder der Statormodule hinaus erzeugt werden, indem die Statormodule anhand der im Speicher abgelegten Information angesteuert werden. Nachteilig an einer manuellen Konfiguration ist es, dass diese sehr zeitintensiv ist und zudem sehr leicht Fehler bei der Erfassung und Ablage der Positionen passieren können, insbesondere wenn es sich um sehr große Planarantriebssysteme mit einer Vielzahl an Statormodulen handelt.

In der Veröffentlichungsschrift DE 10 2009 008 529 A1 ist ferner ein Planarantriebssystem mit einer vorgegebenen Konfiguration von Statormodulen offenbart.

Der Katalog "Flying Motion XPlanar" der Firma Beckhoff offenbart, dass ein Planarantriebssystem frei konfiguriert werden kann, gibt aber keine Hinweise auf ein automatisiertes Konfigurationsverfahren.

Die Veröffentlichung "Multiphysical analysis of moving-magnet planar motor topologies", IEEE Transactions on Magnetics, Bd. 49, Nr. 12, 1. Dezember 2019, Seiten 5730-5741, XP055740761 New York, NY, US offenbart ebenfalls ein Planarantriebssystem, ebenfalls ohne Hinweis auf ein automatisiertes Konfigurationsverfahren

Eine Aufgabe der vorliegenden Erfindung ist es, ein automatisiertes Konfigurationsverfahren anzugeben, mit dem die Positionen der Statormodule relativ zueinander ohne manuelle Eingaben ermittelt werden können. Ferner ist eine Aufgabe der Erfindung, eine Steuereinheit und ein Computerprogramm zur Durchführung des Verfahrens anzugeben sowie ein Planarantriebssystem mit einer solchen Steuereinheit.

Diese Aufgaben werden durch das Verfahren, die Steuereinheit das Computerprogramm sowie das Planarantriebssystem der unabhängigen Patentansprüche gelöst. Weiterbildungen sind in den abhängigen Ansprüchen angegeben. Der vorliegenden Erfindung liegt dabei die Idee zugrunde, Leiterstreifen der Statormodule zu Bestromen und das dadurch erzeugte Magnetfeld mittels Magnetfeldsensoren anderer Statormodule zu bestimmen, um Nachbarschaftsbeziehungen zwischen den Statormodulen zu ermitteln.

Zum generellen Aufbau von Statormodulen und Läufern, Statorsegmenten und Leiterstreifen sowie zur Bestromung der Leiterstreifen, um mittels durch die Bestromung der Leiterstreifen erzeugter Magnetfelder einen Läufer über einer Statorfläche zu halten beziehungsweise mittels eines Wanderfeldes anzutreiben wird auf die Beschreibung der deutschen Patentanmeldung DE 10 2017 131 304.4, insbesondere auf die Beschreibung der Figuren 1, 2, 10, 11 und 12 verwiesen. Bezüglich der Ausgestaltung der Leiterstreifen als Spulenleiter wird auf die Beschreibung der deutschen Patentanmeldung DE 10 2017 131 326.5, veröffentlicht als DE 10 2017 131 326 A1, insbesondere auf die Beschreibung der Figuren 4 bis 11 verwiesen.

Bezüglich der Magnetfeldsensoren und ihrer Anordnung innerhalb der Statormodule wird auf die Beschreibung der deutschen Patentanmeldung DE 10 2017 131 320.6, veröffentlicht als DE 10 2017 131 320 A1, insbesondere auf die Beschreibung der Figuren 4 und 5 verwiesen.

Ein Planarantriebssystem weist mehrere aneinander angrenzende Statormodule zum Antrieb von Läufern auf, wobei die Statormodule jeweils Leiterstreifen zur Erzeugung eines Magnetfelds und jeweils Magnetfeldsensoren aufweisen. Jeweils zumindest zwei Statormodule weisen dabei einander zugewandte Außenkanten auf, wodurch eine räumliche Nachbarschaftsbeziehung zwischen den zumindest zwei Statormodulen besteht. In einem Verfahren zum automatischen Konfigurieren des Planarantriebssystems werden folgende Schritte ausgeführt. Zunächst erfolgt eine Ausgabe eines ersten Steuersignals in einem ersten Ausgabeschritt an ein Sendestatormodul der Statormodule. Das erste Steuersignal beinhaltet, dass im Sendestatormodul mindestens ein Leiterstreifen bestromt werden soll. Anschließend erfolgt ein Ermitteln einer Nachbarschaftsbeziehung zwischen dem Sendestatormodul und einem Empfangsstatormodul der Statormodule in einem ersten Ermittlungsschritt. Bei der Ermittlung der Nachbarschaftsbeziehung werden das erste Steuersignal und ein positives erstes Detektionssignal berücksichtigt, wobei das positive erste Detektionssignal beinhaltet, dass mindestens ein Magnetfeldsensor des Empfangsstatormoduls ein Magnetfeld ermittelt hat.

Durch das Bestromen des Leiterstreifens des Sendestatormoduls wird ein Magnetfeld erzeugt. Dieses Magnetfeld kann von Magnetfeldsensoren des Empfangsstatormoduls detektiert werden, woraufhin durch das Empfangsstatormodul das positive erste Detektionssignal ausgegeben wird. Aufgrund des positiven ersten Detektionssignals kann die Nachbarschaftsbeziehung zwischen dem Sendestatormodul und dem Empfangsstatormodul ermittelt werden. Das bedeutet, dass einer Steuereinheit, die das Verfahren durchführt, nun bekannt ist, dass das Sendestatormodul und das Empfangsstatormodul benachbart sind. Es kann vorgesehen sein, dass das Bestromen derart erfolgt, dass das erzeugte Magnetfeld einen maximalen Wert für die Magnetfeldstärke nicht übersteigt, um zu erreichen, dass das erzeugte Magnetfeld nur von Magnetfeldsensoren angrenzend an das Sendestatormodul gemessen werden kann. Das positive erste Detektionssignal wird dem Empfangsstatormodul zugeordnet, von dem es ausgesendet wurde, um die Nachbarschaftsbeziehung zu ermitteln. Der Leiterstreifen kann dabei als Spulenleiter ausgestaltet und Teil eines Dreiphasensystems sein.

Durch das angegebene Verfahren kann die zeitintensive und fehleranfällige manuelle Konfiguration des Planarantriebssystems entfallen, da die durch das Verfahren ermittelte Nachbarschaftsbeziehung genutzt werden kann, ein Wandermagnetfeld von einem Statormodul zu einem benachbarten Statormodul derart zu erzeugen, dass sich ein Läufer vom Statormodul zum benachbarten Statormodul bewegen kann.

In einer Ausführungsform wird das Verfahren solange wiederholt, bis sämtliche Nachbarschaftsbeziehungen zwischen allen Statormodulen ermittelt sind. Die Statormodule können dabei abwechselnd, nacheinander oder zeitgleich als Sendestatormodule und auch als Empfangsstatormodule ausgebildet sein bzw. fungieren. Dabei können weitere erste Steuersignale an weitere aktuell als Sendestatormodule ausgebildete Statormodule ausgegeben werden und weitere positive erste Detektionssignale berücksichtigt werden. Sobald alle Nachbarschaftsbeziehungen ermittelt sind, ist eine Topographie von Statormodulen bekannt, anhand derer Läufer eines Planarantriebssystems bewegt werden können, wobei eine Steuerung der Bewegung der Läufer derart erfolgen kann, dass die Läufer nicht über einen Rand der Topographie, also eine Außengrenze des Planarantriebssystems hinaus bewegt werden.

In einer Ausführungsform des Verfahrens werden die ermittelten Nachbarschaftsbeziehungen der Statormodule zueinander und somit die Topographie des Planarantriebssystems in einer Referenztabelle abgelegt. Diese Referenztabelle kann dann beispielsweise für jedes Statormodul folgende Informationen enthalten: eine Statormodulidentifikationsbezeichnung; die Anzahl der Randbereiche des Statormoduls; die Statormodulidentifikationsbezeichnungen der Statormodule, zu denen eine Nachbarschaftsbeziehung ermittelt wurde; die Position, Lage und/oder Orientierung der Statormodule mit Nachbarschaftsbeziehung im Verhältnis zur eigenen Position, Lage und/oder Orientierung des Statormoduls; ermittelte Außengrenzen des Planarantriebssystems; eine Netzwerkadresse (beispielsweise eine EtherCAT-Adresse) des Statormoduls. Die Aufzählung der Informationen für die Referenztabelle ist beispielhaft und nicht abschließend. Selbstverständlich können auch mehr oder weniger oder andere Informationen in der Referenztabelle ablegbar sein.

In einer Ausführungsform des Verfahrens sind die Statormodule über einen Kommunikationsbus datentechnisch miteinander verbunden sind. Dabei sind das erste Steuersignal und das erste positive Detektionssignal Teil eines Telegramms oder mehrerer Telegramme eines Kommunikationsbusses. Dadurch wird eine effiziente Kommunikation zwischen den Statormodulen und einer Steuereinheit, die das Verfahren ausführt, bereitgestellt.

In einer Ausführungsform des Verfahrens wird vor dem Aussenden des ersten Steuersignals über den Kommunikationsbus ein Identifikationstelegramm an die Statormodule gesendet, wobei den Statormodulen anhand des Identifikationstelegramms eine Statormodulidentifikationsbezeichnung zugeordnet wird. Dies kann beispielsweise, wenn der Kommunikationsbus auf EtherCAT basiert oder EtherCAT umfasst, mittels der in EtherCAT vorgesehenen Auto-Increment-Adressierung erfolgen. Mit der Auto-Increment-Adressierung kann jedes Statormodul anhand seiner Position in der Kommunikationsstruktur adressiert werden. Die Auto-Increment-Adressierung wird in der Regel nur in einer Startup-Phase benutzt, in der ein Bus-Master Stationsadressen an Slaves, die hier die Statormodule sind, verteilt. Danach können die Statormodule unabhängig von ihrer Position in der Kommunikationsstruktur adressiert werden. Diese Vorgehensweise bietet den Vorteil, dass für die Statormodule keine Statormodulidentifikationsbezeichnungen manuell eingestellt werden müssen. Ein nachträgliches Einfügen von Statormodulen muss nicht zu neuen Statormodulidentifikationsbezeichnungen der bereits vorhandenen Statormodule führen.

In einer Ausführungsform des Verfahrens sind einzelne oder eine Mehrzahl an Statormodulen des Planarantriebssystems an jeweils einen Kommunikationspfad des Kommunikationsbusses in einer Linientopologie angebunden. Der Kommunikationspfad weist eine ununterbrochene Kommunikationsverbindung auf. Die Statormodule eines Kommunikationspfades bilden einen räumlich abgeschlossenen Bereich mit einer durchgehenden Statoroberfläche des Planarantriebssystems. Das Planarantriebssystem kann dabei einen oder mehrere Kommunikationspfade des Kommunikationsbusses aufweisen. Gerade bei sehr großen Planarantriebssystemen kann es erforderlich sein, die Kommunikation zwischen einer Steuerung und den Statormodulen auf mehrere Kommunikationspfade aufzuteilen, da es ansonsten aufgrund von Durchlaufzeiten und gegebenenfalls Durchlaufverzögerungen dazu kommen könnte, dass Zykluszeiten eines Steuerungszyklus des Planarantriebssystems nicht mehr eingehalten werden könnten und das System nicht funktioniert. Durch das Aufteilen der Kommunikationswege in unterschiedliche Kommunikationspfade kann die Kommunikation zwischen der Steuerung und den Statormodulen somit parallelisiert werden, so dass einzelne Telegramme einen kürzeren Umlaufweg nehmen müssen, was zu kürzeren Umlaufzeiten führt.

In einer Ausführungsform des Verfahrens werden zunächst für jeden Kommunikationspfad des Kommunikationsbusses die Nachbarschaftsbeziehungen innerhalb des Kommunikationspfades ermittelt. Dazu wird ein erstes Statormodul des Kommunikationspfades zunächst als Sendestatormodul festgelegt und ein zweites Statormodul des Kommunikationspfades zunächst als Empfangsstatormodul festgelegt. Das erste Statormodul kann dabei das Statormodul mit der kleinsten Statormodulidentifikationsbezeichnung innerhalb des Kommunikationspfades sein. Das zweite Statormodul kann dabei das Statormodul mit der nächsthöheren Statormodulidentifikationsbezeichnung innerhalb des Kommunikationspfades sein. Das erste Steuersignal beinhaltet, mindestens einen ersten Leiterstreifen der Leiterstreifen in einem ersten Randbereich des Sendestatormoduls zu bestromen. Das erste positive Detektionssignal wird ermittelt, wenn ein durch das erste Steuersignal ausgelöstes Magnetfeld mittels der Magnetfeldsensoren des Empfangsstatormoduls gemessen wird. Somit wird die Nachbarschaftsbeziehung als erste Nachbarschaftsbeziehung entlang des ersten Randbereichs des Sendestatormoduls zwischen dem Sendestatormodul und dem Empfangsstatormodul der Statormodule ermittelt. Wenn kein durch das erste Steuersignal ausgelöstes Magnetfeld mittels der Magnetfeldsensoren des Empfangsstatormoduls gemessen wird, wird folglich keine erste Nachbarschaftsbeziehung entlang des ersten Randbereichs des Sendestatormoduls zwischen dem Sendestatormodul und dem Empfangsstatormodul der Statormodule ermittelt. Beim Nicht-Ermitteln der ersten Nachbarschaftsbeziehung werden weitere erste Steuersignale nacheinander ausgegeben derart, dass weitere erste Leiterstreifen der Leiterstreifen in weiteren ersten Randbereichen des Sendestatormoduls bestromt werden, bis eine erste Nachbarschaftsbeziehung zwischen dem Sendestatormodul und dem Empfangsstatormodul ermittelt wurde oder keine weiteren ersten Randbereiche des Sendestatormoduls vorhanden sind. Nach der Ermittlung der ersten Nachbarschaftsbeziehung wird das zweite Statormodul als neues Sendestatormodul und ein drittes Statormodul des Kommunikationspfades als Empfangsstatormodul festgelegt. Das dritte Statormodul kann dabei das Statormodul mit der nächsthöheren Statormodulidentifikationsbezeichnung innerhalb des Kommunikationsstrangs sein. Das Verfahren wird solange wiederholt, bis ein den Kommunikationspfad abschließendes Statormodul des Kommunikationspfads als Empfangsstatormodul festgelegt wird und somit keine weiteren Nachbarschaftsbeziehungen zwischen den Statormodulen des Kommunikationspfades ermittelt werden können. Das abschließende Statormodul kann dabei das Statormodul mit der mit der höchsten Statormodulidentifikationsbezeichnung innerhalb des Kommunikationspfads sein.

Sollte kein positives erstes Detektionssignal des innerhalb des Kommunikationspfades benachbarten Statormoduls ermittelt werden, kann angenommen werden, dass die betreffenden Statormodule zwar innerhalb der Kommunikationsstruktur benachbart, nicht jedoch räumlich benachbart sind. An das zwar innerhalb der Kommunikationsstruktur benachbarte, räumlich jedoch nicht benachbarte Statormodul kann dann ein erneutes erstes Steuersignal ausgegeben werden und ausgehend von diesem nicht benachbarten Statormodul das Verfahren erneut durchgeführt werden. Ergebnis ist eine weitere Teilfläche der Statoroberfläche. Durch das beschriebene Verfahren werden somit innerhalb eines Kommunikationspfades nacheinander sämtliche Nachbarschaftsbeziehungen zwischen den Statormodulen automatisiert erfasst und können in der Referenztabelle entsprechend hinterlegt werden. Das jeweilige Statormodul kann beispielsweise viereckig, insbesondere rechteckig beziehungsweise quadratisch, ausgestaltet sein. Das Statormodul weist dann vier Randbereiche auf, die vier Seitenkanten der Statormodule zugeordnet sind. Bei der Ermittlung der ersten Nachbarschaftsbeziehung kann durch Bestromen von Leiterstreifen in nur einem Randbereich ermittelt werden, an welchen der Randbereiche das weitere Statormodul angrenzt. In diesem Fall können weitere erste Steuersignale für die weiteren Randbereiche des Statormoduls ausgegeben werden, um weitere erste Nachbarschaftsbeziehungen zu ermitteln. Dies ermöglicht eine effiziente Rasterung der Topographie der Statoroberflächen innerhalb des einen Kommunikationspfades. Durch die Zuordnung der Magnetfeldsensoren zumindest teilweise zu den Randbereichen der Statormodule kann anhand der Stärke des mittels der Magnetfeldsensoren gemessenen Magnetfelds eine Lage des Empfangsstatormoduls relativ zum Sendestatormodul bestimmt werden. Die Stärke des Magnetfelds kann dabei auch umfassen, dass nur die Magnetfeldsensoren in einem Randbereich des Empfangsstatormoduls auf das aufgrund des ersten Steuersignals erzeugten Magnetfelds reagieren beziehungsweise dieses Magnetfeld messen. Dadurch kann eine relative Rotation der Statormodule zueinander ermittelt und in der ersten Nachbarschaftsbeziehung berücksichtigt werden. Dies ermöglicht beispielsweise, wenn das Empfangsstatormodul später als Sendestatormodul fungiert und somit Leiterstreifen des Statormoduls bestromt werden sollen, um weitere erste Nachbarschaftsbeziehungen zu ermitteln, den Randbereich, in dem bei der Ermittlung der ersten Nachbarschaftsbeziehung das Magnetfeld gemessen wurde, auszulassen, da hier bereits bekannt ist, dass ein Statormodul angrenzt.

In einer Ausführungsform des Verfahrens weist das Planarantriebssystem mehrere Kommunikationspfade auf, die jeweils eine Statormoduleinheit bilden. Jeweils zumindest zwei Statormodule von verschiedenen Statormoduleinheiten weisen einander zugewandte Außenkanten auf, wodurch eine räumliche Einheitsnachbarschaftsbeziehung zwischen den zumindest zwei Statormoduleinheiten besteht. Zur Ermittlung der Lage und der Position der Einheitsnachbarschaftsbeziehung bzw. der Einheitsnachbarschaftsbeziehungen wird eine Statormoduleinheit als Sendestatormoduleinheit und eine andere Statormoduleinheit als Empfangsstatormoduleinheit festgelegt. Ein zweites Steuersignal wird ausgegeben derart, dass in der Sendestatormoduleinheit nacheinander die ersten Leiterstreifen und/oder die weiteren ersten Leiterstreifen der Leiterstreifen in einem ersten Randbereich und/oder einem weiteren ersten Randbereich der Sendestatormodule der Sendestatormoduleinheit bestromt werden, für die innerhalb des jeweiligen Kommunikationspfades keine Nachbarschaftsbeziehung ermittelt wurde. Ein zweites positives Detektionssignal wird ermittelt, wenn ein durch das zweite Steuersignal ausgelöstes Magnetfeld mittels der Magnetfeldsensoren der Empfangsstatormodule der Empfangsstatormoduleinheit gemessen wird und so die Einheitsnachbarschaftsbeziehung zwischen der Sendestatormoduleinheit und der Empfangsstatormoduleinheit der Statormoduleinheiten ermittelt wird. Wenn kein durch das zweite Steuersignal ausgelöstes Magnetfeld mittels der Magnetfeldsensoren der Empfangsstatormoduleinheit gemessen wird, wird keine Einheitsnachbarschaftsbeziehung zwischen der Sendestatormoduleinheit und der Empfangsstatormoduleinheit der Statormoduleinheiten ermittelt. Das Verfahren wird wiederholt, bis alle Einheitsnachbarschaftsbeziehung zwischen den Statormoduleinheiten des Planarantriebssystems ermittelt wurden. Weiterhin wird das Verfahren für weitere Statormodule des Kommunikationsbusses durchgeführt. Durch das beschriebene Verfahren werden somit nach der Ermittlung der Nachbarschaftsbeziehungen innerhalb eines Kommunikationspfades nacheinander sämtliche Einheitsnachbarschaftsbeziehungen zwischen den Statormoduleinheiten automatisiert erfasst und können in der Referenztabelle entsprechend hinterlegt werden. Dies ermöglicht in einem zweistufigen Verfahren die Erfassungen sämtlicher Nachbarschaftsbeziehungen untereinander. Innerhalb der Kommunikationsstruktur bzw. eines Kommunikationspfades können zwei Statormodule benachbart sein, wenn die Datenübertragung derart ausgestaltet ist, dass Telegramme des Kommunikationsbusses direkt von einem der Statormodule zum anderen der Statormodule übertragen werden können. Erfolgt diese Übertragung mittels Datenkabeln, kann die Verkabelung zumindest teilweise innerhalb des Planarantriebssystems so erfolgen, dass räumlich benachbarte Statormodule auch innerhalb des Kommunikationspfades benachbart sind. Nun kann ein deutlich effizienteres Verfahren zur Konfiguration des Planarantriebssystems bereitgestellt werden, da das erste Steuersignal an das erste Statormodul in dem Kommunikationspfad ausgegeben werden kann und gleichzeitig eine Ermittlung des dadurch erzeugten Magnetfelds durch das in dem Kommunikationspfad benachbarte und damit auch räumlich mit großer Wahrscheinlichkeit benachbarte zweite Statormodul erfolgen kann. Somit erleichtert die Information über den Kommunikationspfad der Statormodule das Ermitteln der entsprechenden Nachbarschaftsbeziehungen. Nach dem Ermitteln der ersten Nachbarschaftsbeziehung ist also bekannt, dass eine Teilfläche der Statoroberfläche bestehend aus dem ersten Statormodul und dem zweiten Statormodul vorliegt.

In einer Ausführungsform des Verfahrens beinhaltet das zweite Steuersignal, dass zeitgleich alle ersten Leiterstreifen und/oder weiteren ersten Leiterstreifen in einem ersten Randbereich und/oder einem weiteren ersten Randbereich der Sendestatormodule der Sendestatormoduleinheiten bestromt werden, für die innerhalb des Kommunikationspfades keine Nachbarschaftsbeziehungen ermittelt wurden. Somit wird bei einer Mehrzahl an Statormodulen innerhalb eines Kommunikationspfades nicht nur ein Randbereich, sondern zeitgleich eine Mehrzahl an Randbereichen bestromt, was zu einer schnelleren Ermittlung der Einheitsnachbarschaftsbeziehungen führt. Zur weiteren Zeitersparnis kann das Verfahren auch parallel in mehreren Kommunikationspfaden durchgeführt werden.

In einer Ausführungsform des Verfahrens beinhaltet das erste Steuersignal mindestens einen Leiterstreifen in einem ersten Randbereich des Sendestatormoduls zu bestromen. Die Magnetfeldsensoren sind dabei zumindest teilweise Randbereichen der Statormodule zugeordnet. Anhand der Stärke des mittels der Magnetfeldsensoren gemessenen Magnetfelds wird das positive erste Detektionssignal ermittelt und somit die Nachbarschaftsbeziehung, sowie eine Lage und Position des Empfangsstatormoduls relativ zum Sendestatormodul bestimmt. Somit wird in nur einem Schritt nicht nur die Nachbarschaftsbeziehung, sondern zeitgleich auch die Position, Lage und/oder Orientierung der beiden Statormodule zueinander erfasst und die Informationen können in der Referenztabelle abgelegt werden. Die Stärke des gemessenen Magnetfeldes kann auch ein einfaches "Signal empfangen" oder "Signal nicht empfangen" und muss nicht über einen gewissen Schwellwert an Signalstärke hinausgehen.

In einer Ausführungsform des Verfahrens beinhaltet das erste Steuersignal mindestens einen ersten Leiterstreifen der Leiterstreifen in einem ersten Randbereich des Sendestatormoduls zu bestromen. Das erste positive Detektionssignal wird ermittelt, wenn ein durch das erste Steuersignal ausgelöstes Magnetfeld mittels der Magnetfeldsensoren des Empfangsstatormoduls gemessen und so die Nachbarschaftsbeziehung als erste Nachbarschaftsbeziehung ermittelt wird. Wenn kein durch das erste Steuersignal ausgelöstes Magnetfeld mittels der Magnetfeldsensoren des Empfangsstatormoduls gemessen wird, wird entsprechend keine erste Nachbarschaftsbeziehung zwischen dem Sendestatormodul und dem Empfangsstatormodul der Statormodule ermittelt. Nach dem Ermitteln bzw. Nicht-Ermitteln der ersten Nachbarschaftsbeziehung werden weitere erste Steuersignale nacheinander ausgegeben derart, dass weitere erste Leiterstreifen der Leiterstreifen in weiteren ersten Randbereichen des Sendestatormoduls bestromt werden, bis entweder weitere Nachbarschaftsbeziehungen zu weiteren Empfangsstatormodulen ermittelt bzw. nicht ermittelt wurden oder keine weiteren ersten Randbereiche des Sendestatormoduls vorhanden sind.

In einer Ausführungsform des Verfahrens weist das Planarantriebssystem eine Mehrzahl an Statormodulen auf, wobei ein Statormodul als Sendestatormodul fungiert und alle weiteren Statormodule gleichzeitig als Empfangsstatormodule fungieren. Das erste Steuersignal beinhaltet, mindestens einen ersten Leiterstreifen der Leiterstreifen in einem ersten Randbereich des Sendestatormoduls zu bestromen. Das erste positive Detektionssignal wird ermittelt, wenn ein durch das erste Steuersignal ausgelöstes Magnetfeld mittels der Magnetfeldsensoren eines der Empfangsstatormodule gemessen und so die Nachbarschaftsbeziehung als erste Nachbarschaftsbeziehung zwischen dem Sendestatormodul und dem messenden Empfangsstatormodul ermittelt wird. Wenn kein durch das erste Steuersignal ausgelöstes Magnetfeld mittels der Magnetfeldsensoren der Empfangsstatormodule gemessen wird, wird die dem ersten Randbereich des Sendestatormoduls zugeordnete Außenkante als Außengrenze des Planarantriebssystems ermittelt. Vorteilhaft wird das Verfahren zunächst für die weiteren ersten Randbereiche des Sendestatormoduls wiederholt, bis für das Sendestatormodul alle Nachbarschaftsbeziehungen bzw. Außengrenzen ermittelt sind, wobei dann ein anderes Statormodul des Planarantriebssystems als Sendestatormodul fungiert und alle weiteren Statormodule gleichzeitig als Empfangsstatormodule fungieren, und das Verfahren wiederholt wird, bis für alle Statormodule alle Nachbarschaftsbeziehungen bzw. Außengrenzen ermittelt sind. Somit kann sehr schnell und einfach für das gesamte Planarantriebssystem die Topographie der Statoroberflächen bestehend aus Nachbarschaftsbeziehungen und Außengrenzen ermittelt werden.

In einer Ausführungsform des Verfahrens werden die ermittelten Nachbarschaftsbeziehungen bzw. Außengrenzen des Planarantriebssystems parallel in einer Referenztabelle abgelegt. Somit braucht die Ermittlung der Nachbarschaftsbeziehungen bzw. Außenkanten nur noch für die Statormodule durchgeführt werden, deren Nachbarschaftsbeziehungen bzw. Außenkanten noch nicht ermittelt wurden oder sich aus den ermittelten Nachbarschaftsbeziehungen bzw. Außenkanten von anderen Statormodulen ergeben. Sind beispielweise vier Statormodule physikalisch in einem Quadrat angeordnet, so reicht die Erfassung von drei Nachbarschaftsbeziehungen aus. Die vierte Nachbarschaftsbeziehung ergibt sich aus der Lage und Orientierung und der Information bzgl. der Nachbarschaftsbeziehungen automatisch, ohne dass diese mittels des beschriebenen Verfahrens ermittelt werden muss. Dieses Vorgehen bringt nochmals eine Zeitersparnis bei der automatischen Konfiguration des Planarantriebssystems mit sich.

In einer Ausführungsform des Verfahrens umfasst das erste Steuersignal eine vorgegebene Frequenz, eine vorgegebene Stromstärke und/oder eine vorgegebene Dauer Bestromung, wobei das Bestromen der Leiterstreifen mit der vorgegebenen Frequenz, Stromstärke und/oder Dauer erfolgt und das erste Detektionssignal hinsichtlich der vorgegebenen Frequenz, Stromstärke und/oder Dauer ausgewertet wird. Dadurch kann eine weitere Verbesserung des Verfahrens erreicht werden. Werden mehrere Stränge parallel untersucht, können unterschiedliche Frequenzen, Stromstärken und/oder Dauern verwendet werden, um unerwünschte Störungen auszuschließen und die ermittelten Magnetfelder eindeutig zuzuordnen. Analog kann auch das zweite Steuersignal eine vorgegebene Frequenz, eine vorgegebene Stromstärke und/oder eine vorgegebene Dauer Bestromung umfassen, wobei das Bestromen der Leiterstreifen mit der vorgegebenen Frequenz, Stromstärke und/oder Dauer erfolgt und das zweite Detektionssignal hinsichtlich der vorgegebenen Frequenz, Stromstärke und/oder Dauer ausgewertet wird. Dadurch kann eine weitere Verbesserung des Verfahrens erreicht werden.

In einer Ausführungsform des Verfahrens liegt die vorgegebene Frequenz zwischen zweihundert Hertz und zweitausend Hertz. Dieser Frequenzbereich eignet sich sowohl für eine Übertragung der Rohdaten der gemessenen Magnetfelder und einer Auswertung hinsichtlich der Frequenz in der Steuereinheit als auch für eine Auswertung in den Statormodulen. Im letzteren Fall kann vorgesehen sein, dass die vorgegebene Frequenz auch an weitere Statormodule übermittelt wird, um die Auswertung vornehmen zu können.

Die Erfindung umfasst ferner eine Steuereinheit mit einer Recheneinheit und einem Kommunikationsanschluss, wobei Steuersignale über den Kommunikationsanschluss ausgegeben werden können und Detektionssignale über den Kommunikationsanschluss empfangen werden können. Die Recheneinheit ist eingerichtet, eines der erfindungsgemäßen Verfahren durchzuführen.

Die Erfindung umfasst ferner ein Computerprogramm, umfassend Programmcode, der ausgeführt auf einer Recheneinheit die Recheneinheit dazu veranlasst, das erfindungsgemäße Verfahren auszuführen.

Die Erfindung umfasst ferner ein Planarantriebssystem mit mehreren Statormodulen, mindestens einem Läufer und der Steuereinheit.

Die Erfindung wird nachfolgend anhand von Ausführungsbeispielen und unter Bezugnahme auf Figuren näher erläutert. Dabei zeigen jeweils in schematischer Darstellung
- Fig. 1: ein Planarantriebssystem;
- Fig. 2: einen Läufer;
- Fig. 3: einen Statoraufbau;
- Fig. 4: eine elektronische Verschaltung von Leiterstreifen;
- Fig. 5: eine Anordnung von Statormodulen mit Leiterstreifen und Magnetfeldsensoren;
- Fig. 6: eine weitere Anordnung von Statormodulen mit Leiterstreifen und Magnetfeldsensoren;
- Fig. 7: ein Planarantriebssystem mit Strängen von Statormodulen;
- Fig. 8: ein Planarantriebssystem mit Strängen von Statormodulen;
- Fig. 9: eine Aufteilung einer Statoroberfläche mehrerer Statormodule in Teilflächen;
- Fig. 10: eine zusammengesetzte Statoroberfläche; und
- Fig. 11: ein Ablaufdiagramm eines Konfigurationsverfahrens.

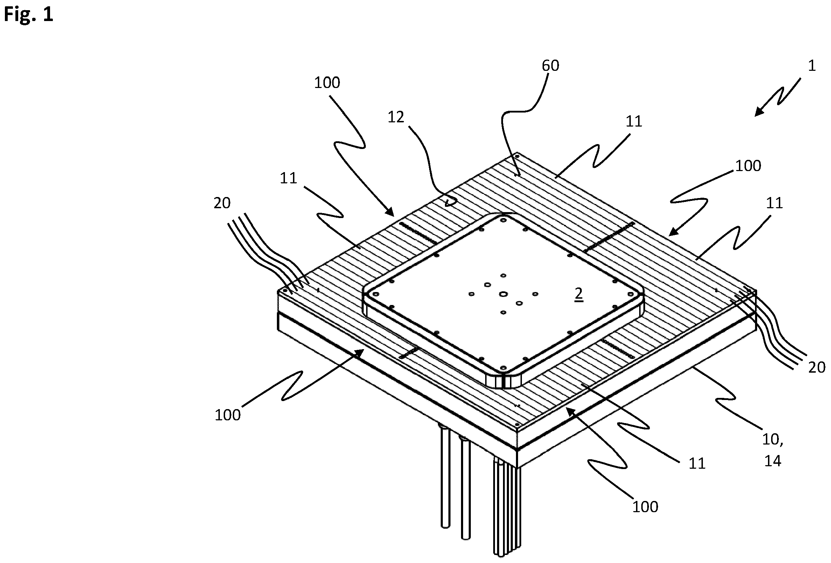

**Fig. 1** zeigt eine isometrische Ansicht eines Planarantriebssystems 1 bestehend aus einem Läufer 2 und einem quadratischen Statormodul 60. Weitere, nicht dargestellte Statormodule 60 können ergänzend vorgesehen und an das Statormodul 60 angrenzend angeordnet sein. Wie im Folgenden noch detailliert beschrieben wird, kann das Statormodul bei der Umsetzung des erfindungsgemäßen Verfahrens sowohl als Sendestatormodul 10 als auch als Empfangsstatormodul 14 ausgebildet sein bzw. fungieren. Das Statormodul 60 weist vier Statorsektoren 11 auf, die eine gemeinsame Statoroberfläche 12 bilden. Innerhalb der Statorsektoren 11 sind Leiterstreifen 20 angeordnet, die bestromt werden können. Durch die Bestromung der Leiterstreifen 20 kann ein Magnetfeld oberhalb der Statoroberfläche 12 erzeugt werden, welches mit Magneteinheiten, beispielsweise in Form von Permanentmagneten, des Läufers 2 wechselwirken kann derart, dass der Läufer 2 oberhalb der Statoroberfläche 12 gehalten und mittels eines durch die Leiterstreifen 20 erzeugten Wanderfelds bewegt werden kann. Das Statormodul 60 weist Außenkanten 100 auf, die anderen Statormodulen des Planarantriebssystems 1 zugewandt sein können.

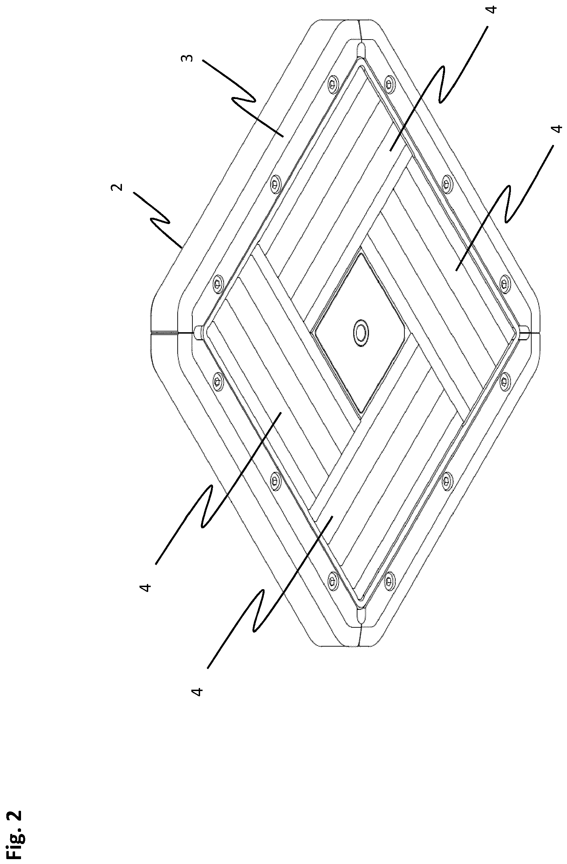

**Fig. 2** zeigt den Läufer 2 der Fig. 1 in einer isometrischen Ansicht von unten. Der Läufer 2 weist an einer Läuferunterseite 3, die in Fig. 1 der Statoroberfläche 12 zugewandt ist, vier Magneteinheiten 4 auf, die jeweils eine Anordnung von Permanentmagneten umfassen können.

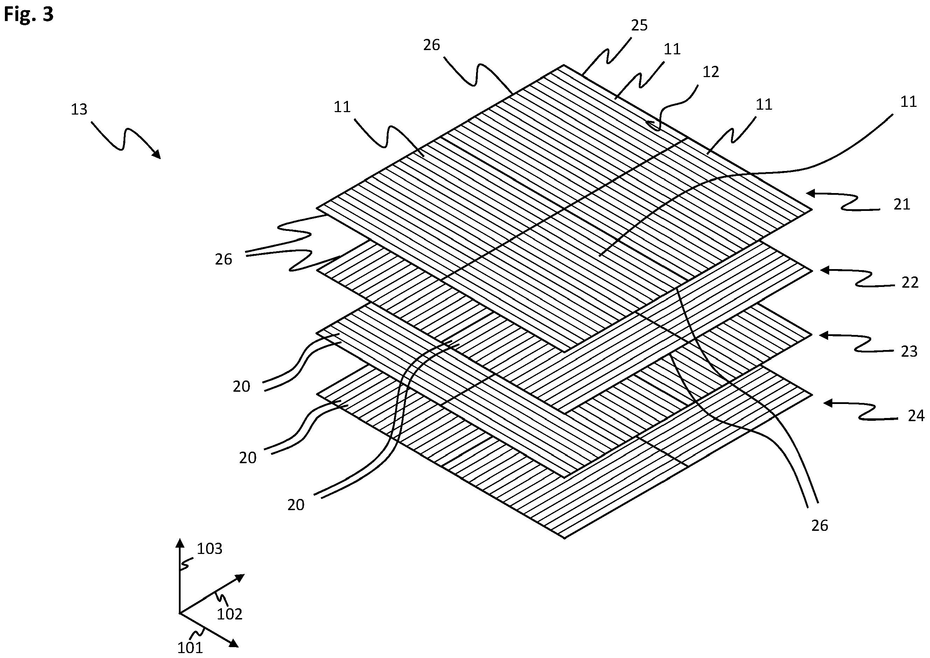

**Fig. 3** zeigt einen Statoraufbau 13, der im Statormodul 60 der Fig. 1 vorgesehen sein kann. Die Leiterstreifen 20 sind in einer ersten Leiterstreifenebene 21, einer zweiten Leiterstreifenebene 22, einer dritten Leiterstreifenebene 23 und einer vierten Leiterstreifenebene 24 angeordnet, die jeweils parallel zueinander sind. Eine x-Achse 101 und eine y-Achse 102 eines Koordinatensystems sind parallel zur ersten Leiterstreifenebene 21 angeordnet, eine z-Achse 103 ist senkrecht zur ersten Leiterstreifenebene 21 angeordnet. Der Statoraufbau 13 weist einen ersten Randbereich 25 und weitere erste Randbereiche 26 auf. Die Leiterstreifen 20 der ersten Leiterstreifenebene 21 und der dritten Leiterstreifenebene 23 sind parallel zur x-Achse 101 angeordnet. Die Leiterstreifen 20 der zweiten Leiterstreifenebene 22 und der vierten Leiterstreifenebene 24 sind parallel zur y-Achse 102 angeordnet. Alternativ zur Darstellung der Fig. 3 können auch nur die erste Leiterstreifenebene 21 und die zweite Leiterstreifenebene 22 vorgesehen sein, oder zusätzliche Leiterstreifenebenen. Die Leiterstreifen 20 können zur Erzeugung eines Magnetfelds dienen, mit dem der Läufer 2 der Fig. 1 und 2 oberhalb der Statoroberfläche 12 der ersten Leiterstreifenebene 21 gehalten werden kann. Der Statoraufbau 13 ist in vier Statorsektoren 11 unterteilt, wobei die Leiterstreifen 20 innerhalb der Statorsektoren 11 individuell bestromt werden können.

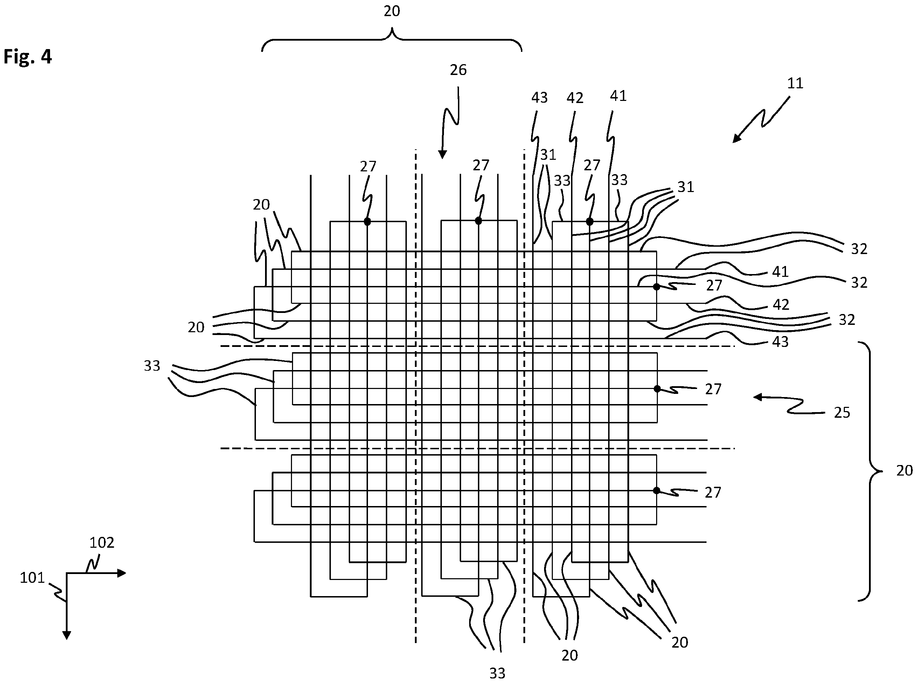

Zum generellen Aufbau der Statormodule 10 der Fig. 1 und des Statoraufbaus 13 der Fig. 3 wird zusätzlich auf die die Beschreibung der deutschen Patentanmeldung DE 10 2017 131 326.5 vom 27. Dezember 2017, insbesondere auf die Beschreibung der Figuren 4 bis 11, verwiesen.

**Fig. 4** zeigt ein Schaltbild eines Statorsektors 11 bestehend aus einer ersten Leiterstreifenebene und einer zweiten Leiterstreifenebene, die analog zu Fig. 3 ausgestaltet sein können. Die Leiterstreifen 20 sind jeweils zu Dreiphasensystemen zusammengeschlossen. Im ersten Randbereich 25 sind erste Leiterstreifen 31 derart zusammengeschlossen, dass jeweils zwei Leiterstreifen 20 eine Spule 33 bilden. Die sechs ersten Leiterstreifen 31 bilden dabei drei Spulen 33, die über einen Sternpunkt 27 miteinander verbunden sind. Ein erster Anschluss 41 ist mit einer der Spulen 33 verbunden. Ein zweiter Anschluss 42 ist mit einer der Spulen 33 verbunden. Ein dritter Anschluss 43 ist mit einer der Spulen 33 verbunden. Die Spulen 33 sind dabei so ausgestaltet, dass ein über den ersten Anschluss 41 eingebrachter Strom durch die zugehörige Spule 33 zum Sternpunkt fließt und sich dort auf die beiden anderen Spulen 33 aufteilt, um anschließend über den zweiten Anschluss 42 beziehungsweise den dritten Anschluss 43 abzufließen. Die Verschaltung der ersten Leiterstreifen 31 zu den Spulen 33 ist dabei derart ausgestaltet, dass sich durch die Stromflüsse innerhalb der Spulen 33 ausgebildete Magnetfelder verstärken. Im Regelfall wird der durch den ersten Anschluss 41 fließende Strom gleichmäßig am Sternpunkt 27 aufgeteilt, so dass eine Stromstärke am zweiten Anschluss 42 beziehungsweise am dritten Anschluss 43 jeweils die Hälfte einer Stromstärke am ersten Anschluss 41 beträgt. Weitere erste Leiterstreifen 32 in einem weiteren ersten Randbereich 26 sind analog zu Spulen 33 verschaltet.

Die in Fig. 3 ebenfalls vorgesehene dritte Leiterstreifenebene 23 beziehungsweise vierte Leiterstreifenebene 24 kann analog zu der in Fig. 4 gezeigten Verschaltung verschaltet sein.

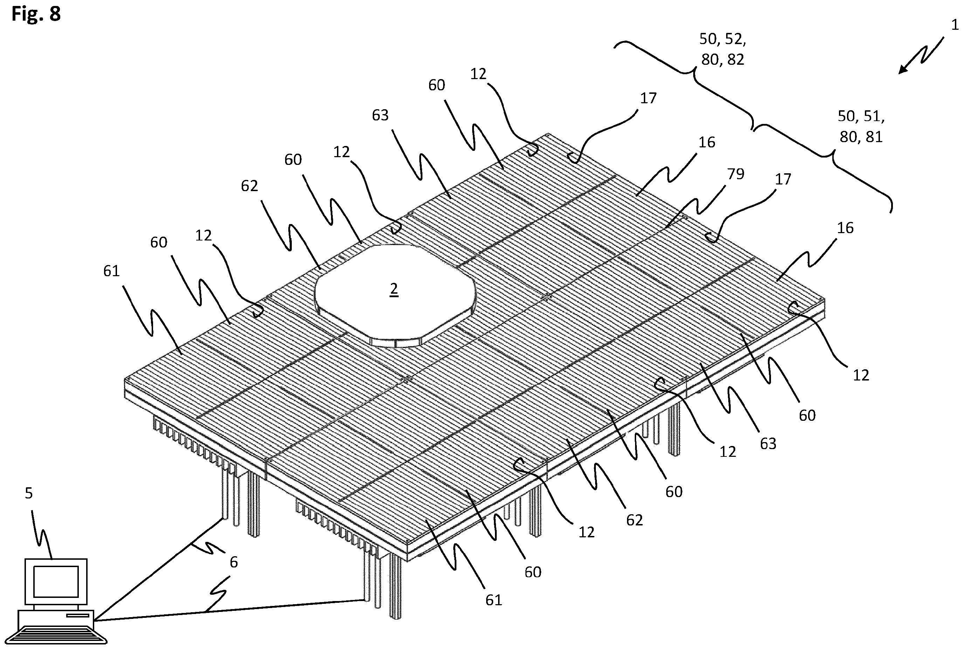

Zur Bestromung der Spulen 33 wird auch auf die die Beschreibung der deutschen Patentanmeldung DE 10 2017 131 326.5 vom 27. Dezember 2017, insbesondere auf die Beschreibung der Figuren 8 bis 10, verwiesen.

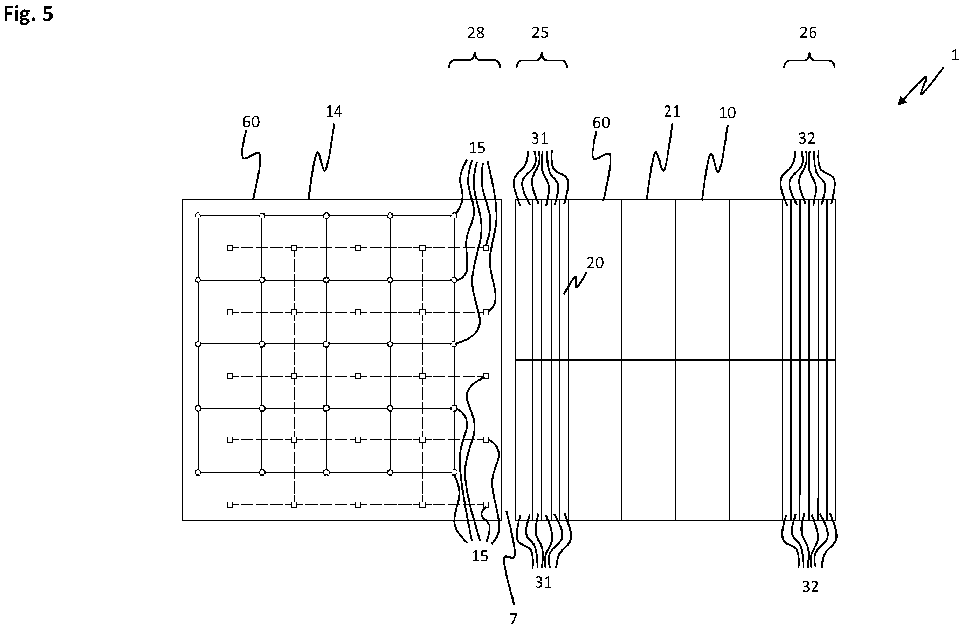

**Fig. 5** zeigt eine schematische Ansicht eines Statormoduls 60, das als Sendestatormodul 10 ausgebildet ist bzw. fungiert und eines Statormoduls 60, das als Empfangsstatormodul 14 ausgebildet ist bzw. fungiert, deren Leiterstreifen jeweils wie in den Fig. 3 und 4 gezeigt ausgestaltet sein können.

Für das Sendestatormodul 10 ist die erste Leiterstreifenebene 21 dargestellt. Für das Empfangsstatormodul 14 sind keine Leiterstreifen dargestellt, sondern eine Anordnung von Magnetfeldsensoren 15. Die Magnetfeldsensoren 15 können beispielsweise unterhalb der Leiterstreifen 20 angeordnet sein. Grundsätzlich können das Sendestatormodul 10 und das Empfangsstatormodul 14 identisch oder analog ausgebildet sein. Um eine erste Nachbarschaftsbeziehung 7 zwischen dem Sendestatormodul 10 und dem Empfangsstatormodul 14 zu ermitteln, kann das im Folgenden beschriebene Verfahren durchgeführt werden. Zunächst wird ein erstes Steuersignal in einem ersten Ausgabeschritt an das Sendestatormodul 10 ausgegeben. Das erste Steuersignal beinhaltet, dass im Sendestatormodul 10 ein Leiterstreifen 20 bestromt werden soll. Dabei kann es vorgesehen sein, die ersten Leiterstreifen 31 im ersten Randbereich 25 zu bestromen, so dass im ersten Randbereich 25 ein Magnetfeld erzeugt wird. Anschließend wird die erste Nachbarschaftsbeziehung 7 zwischen dem Sendestatormodul 10 und dem Empfangsstatormodul 14 in einem ersten Ermittlungsschritt 210 ermittelt. Bei der Ermittlung der ersten Nachbarschaftsbeziehung 7 werden das erste Steuersignal und ein positives erstes Detektionssignal berücksichtigt. Das positive erste Detektionssignal beinhaltet, dass mindestens ein Magnetfeldsensor 15 des Empfangsstatormoduls 14 ein Magnetfeld ermittelt hat. Aufgrund der Bestromung der ersten Leiterstreifen 31 in einem ersten Randbereich 25 des Sendestatormoduls 10 wird das Magnetfeld in einem zweiten Randbereich 28 des Empfangsstatormoduls 14 erfasst werden, so dass neben der ersten Nachbarschaftsbeziehung auch gleich die relative Lage und Orientierung der beiden Statormodule 60 zueinander ermittelt wird, da ausgewertet werden kann, welche Randbereiche der einzelnen Statormodule 60 aneinandergrenzen. Das Verfahren kann dabei zur Konfiguration eines Planarantriebssystems 1 dienen. Das Verfahren basiert darauf, mittels der Magnetfeldsensoren 15 des Empfangsstatormoduls 14 ein durch das Bestromen von Leiterstreifen 20 des Sendestatormoduls 10 erzeugtes Magnetfeld zu messen und daraus die erste Nachbarschaftsbeziehung 7 zu ermitteln.

Dadurch kann das Verfahren automatisiert ablaufen im Gegensatz zu einer manuellen Eingabe von Relativpositionen der beiden Statormodule 60 zueinander.

Für die Ermittlung des positiven ersten Detektionssignals können insbesondere die in einem zweiten Randbereich 28 des Empfangsstatormoduls 14 angeordneten Magnetfeldsensoren 15 verwendet werden. Dabei ist der zweite Randbereich 28 des Empfangsstatormoduls 14 dem Sendestatormodul 10 zugewandt.

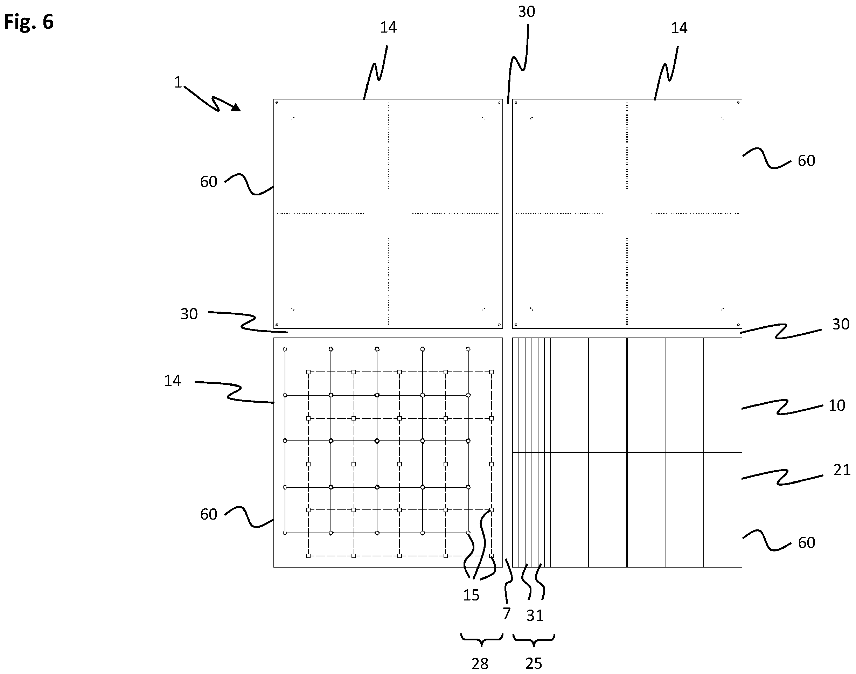

**Fig.** 6 zeigt eine schematische Ansicht eines Planarantriebssystems 1 mit vier Statormodulen 60. Die vier Statormodule 60 sind dabei ausgebildet, wie zuvor zu den Figuren 1 bis 5 beschrieben. In einem ersten Verfahrensschritt fungiert eines der Statormodule 60 als Sendestatormodul 10 und drei Statormodule 60 als Empfangsstatormodule 14, deren Leiterstreifen jeweils wie in den Fig. 3 und 4 gezeigt ausgestaltet sein können. Für das Sendestatormodul 10 ist die erste Leiterstreifenebene 21 dargestellt. Für eines der Empfangsstatormodule 14 sind keine Leiterstreifen dargestellt, sondern eine mögliche Anordnung von Magnetfeldsensoren 15. Für die weiteren beiden Empfangsstatormodule 14 sind aus Gründen der Übersichtlichkeit weder eine erste Leiterstreifenebene 21 noch Magnetfeldsensoren 15 dargestellt. Zur Ermittlung der Nachbarschaftsbeziehungen 30 der Statormodule 60 kann es vorgesehen sein, dass zunächst eines der Statormodule 60 als Sendestatormodul 10 und die anderen Statormodule alle zeitgleich als Empfangsstatormodule 14 fungieren. Aufgrund des ersten Steuersignals werden die ersten Leiterstreifen 31 im ersten Randbereich 25 des Sendestatormoduls 10 bestromt und erzeugen entsprechend ein Magnetfeld. Alle Magnetfeldsensoren 15 der drei Empfangsstatormodule 14 werden gleichzeitig ausgewertet, ob sie das Magnetfeld erfassen. Die Signale der (zum Teil nicht dargestellten) Magnetfeldsensoren 15 der Empfangsstatormodule 14 werden zudem derart ausgewertet und die Nachbarschaftsbeziehung 30 als erste Nachbarschaftsbeziehung 7 dadurch bestimmt, dass ausgewertet wird, von welchem der weiteren Statormodule 14 das durch das Bestromen der Leiterstreifen 20 erzeugte Magnetfeld, insbesondere in welchem zweiten Randbereich 28 der Empfangsstatormodule 14 das Magnetfeld gemessen wird. Somit gibt es in Bezug auf die Lage, Orientierung und Position eine eindeutige erste Nachbarschaftsbeziehung 7 zwischen dem Sendestatormodul 10 und dem Empfangsstatormodul 14, in dessen zweiten Randbereich 28 das Magnetfeld erfasst wurde. In dem dargestellten Ausführungsbeispiel wäre das das Empfangsstatormodul 14 unten links.

Nachdem nun die erste Nachbarschaftsbeziehung 7 in dem Planarantriebssystem 1 ermittelt wurde, wird in einem Ausführungsbeispiel das Verfahren solange wiederholt, bis neben der ersten Nachbarschaftsbeziehung 7 auch weitere Nachbarschaftsbeziehungen 30 zwischen den Statormodulen 60 ermittelt wurden. Dazu wird dann beispielweise das Statormodul 60, in dessen zweiten Randbereich 28 das Magnetfeld erfasst wurde, in dem dargestellten Ausführungsbeispiel wäre das das Empfangsstatormodul 14 unten links, als Sendestatormodul 10 festgelegt und alle anderen Statormodule 60 des Planarantriebssystems 1 fungieren als Empfangsstatormodule 14. Da die erste Nachbarschaftsbeziehung 7 ja bereits ermittelt wurde, wird in dem zweiten Randbereich 28 kein Magnetfeld mehr erzeugt, sondern in anderen ersten Randbereichen des Sendestatormoduls 10. Somit können mittels der Wiederholung des Verfahrens 2-te bis n-te Nachbarschaftsbeziehungen 30 zwischen einzelnen Statormodulen 60 ermittelt werden.

Sofern bei der Bestromung eines ersten Randbereichs 25 eines Sendestatormoduls 10 in keinem der Empfangsstatormodule 14 ein erstes positives Detektionssignal erfasst wird, kann in einer Ausführungsform vorgesehen sein, dass dieser erste Randbereich 25 als Außengrenze des Planarantriebssystems 1 ermittelt wird.

Die ermittelten Nachbarschaftsbeziehungen 30 und/oder Außengrenzen können in einer Referenztabelle hinterlegt werden.

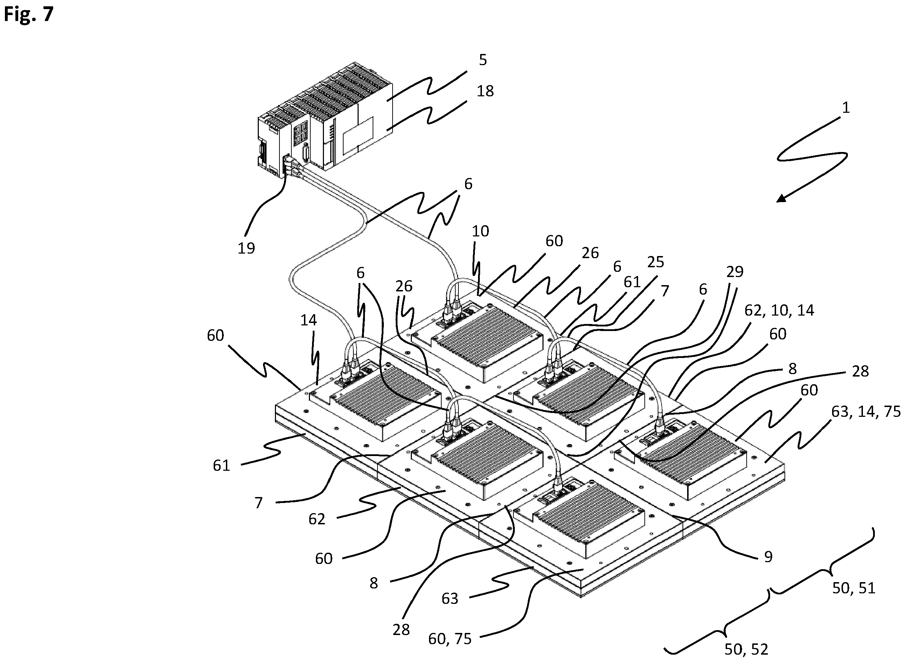

**Fig.** 7 zeigt eine isometrische Ansicht von unten auf ein Planarantriebssystem 1 bestehend aus sechs Statormodulen 60 und einer Steuereinheit 5. Die Statormodule 60 bilden zwei Kommunikationspfade 50, die in zwei physikalischen Strängen, einen ersten Strang 51 und einen zweiten Strang 52, von Statormodulen 60, wobei in jedem der Kommunikationspfade 50 ein erstes Statormodul 61, ein zweites Statormodul 62 und ein drittes Statormodul 63 angeordnet ist. Innerhalb der Kommunikationspfade 50 sind die Statormodule 60 mittels einzelner Kabel 6 verbunden. Die Steuereinheit 5 weist eine Recheneinheit 18 und zwei Kommunikationsanschlüsse 19 auf. Von den Kommunikationsanschlüssen 19 der Steuereinheit 5 führt jeweils ein Kabel 6 zu jedem der Kommunikationspfade 50, wobei dieses Kabel 6 jeweils zum ersten Statormodul 61 führt. Ein Kabel 6 führt jeweils vom ersten Statormodul 61 zum zweiten Statormodul 62, ein Kabel 6 führt jeweils vom zweiten Statormodul 62 zum dritten Statormodul 63. Alternativ ist auch eine drahtlose Verbindung der Statormodule 60 mit der Steuereinheit 5 möglich, wobei es dann entsprechend drahtlose Kommunikationspfade 50 geben würde.

Die Statormodule 60 können dabei Teilnehmer eines Kommunikationsbusses sein, wobei die Steuereinheit 5 Telegramme an die Statormodule 60 senden oder von den Statormodulen 60 empfangen kann. Die Telegramme können beispielsweise das bereits beschriebene erste Steuersignal und/oder Messwerte der Magnetfeldsensoren beinhalten. Der Kommunikationsbus kann beispielsweise EtherCAT umfassen, die Telegramme können dem EtherCAT Protokoll entsprechend ausgestaltet sein.

Wird nur das erste Steuersignal an eines der Statormodule 60 ausgegeben, kann dies über die Kabel 6 und optional über den Kommunikationsbus ausgeführt werden. Beispielsweise kann das erste Steuersignal beinhalten, dass das erste Statormodul 61 des ersten Strangs 51 in einem ersten Randbereich 25 Leiterstreifen 20 Bestromen soll. Somit fungiert das erste Statormodul 61 dann als Sendestatormodul 10. Der erste Randbereich 25 ist dabei dem zweiten Statormodul 62 des ersten Strangs 51 zugewandt. Das positive erste Detektionssignal kann nun vom zweiten Statormodul 62 des ersten Strangs 51 ausgegeben werden, anhand dessen die Steuereinheit 5 die erste Nachbarschaftsbeziehung 7 zwischen dem ersten Statormodul 61 und dem zweiten Statormodul 62 des ersten Strangs 51 ermittelt. Das zweite Statormodul 62 des ersten Strangs 51 dient dabei als Empfangsstatormodul 14. Es kann ein weiteres erstes Steuersignal an das erste Statormodul 61 des ersten Strangs 51 ausgegeben werden, diesmal beinhaltend, dass das erste Statormodul 61 des ersten Strangs 51 in einem weiteren ersten Randbereich 26 Leiterstreifen 20 bestromen soll. Der weitere erste Randbereich 26 ist dabei dem ersten Statormodul 61 des zweiten Strangs 52 zugewandt. Das positive erste Detektionssignal kann nun vom ersten Statormodul 61 des zweiten Strangs 52 ausgegeben werden, anhand dessen die Steuereinheit 5 eine weitere Nachbarschaftsbeziehung 9 zwischen dem ersten Statormodul 61 des ersten Strangs 51 und dem ersten Statormodul 61 des zweiten Strangs 52 ermittelt. Das erste Statormodul 61 des zweiten Strangs 52 dient dabei als Empfangsstatormodul 14.

Das im vorigen Absatz beschriebene Konfigurationsverfahren kann verwendet werden unabhängig davon ob die Statormodule 60 in Kommunikationspfaden 50 angeordnet sind oder nicht. Für den Fall, dass die Statormodule 60 in Kommunikationspfaden 50 angeordnet sind, umfasst die Erfindung ein effizienteres Konfigurationsverfahren, das im Folgenden beschrieben wird.

Sind das erste Statormodul 61 und das zweite Statormodul 62 innerhalb einer Kommunikationsstruktur des Kommunikationsbusses wie in Fig. 7 dargestellt benachbart, also Teil des ersten Strangs 51 oder des zweiten Strangs 52, kann das erste Steuersignal beinhalten, einen Leiterstreifen 20 in einem ersten Randbereich 25 des ersten Statormoduls 61 des ersten Strangs 51 zu bestromen. Das erste Detektionssignal ist dann positiv, wenn ein durch das erste Steuersignal ausgelöstes Magnetfeld mittels der Magnetfeldsensoren des zweiten Statormoduls 62 des ersten Strangs 51 gemessen wird und negativ, wenn das durch das erste Steuersignal ausgelöste Magnetfeld mittels der Magnetfeldsensoren des zweiten Statormoduls 62 des ersten Strangs nicht gemessen wird. Im in Fig. 7 dargestellten Fall ist das erste Detektionssignal also positiv, da der erste Randbereich 25 dem zweiten Statormodul 62 des ersten Strangs 51 zugewandt ist. Durch das positive erste Detektionssignal kann die erste Nachbarschaftsbeziehung 7 ermittelt werden.

Wäre das erste Steuersignal derart gewesen, dass dadurch im ersten Statormodul 61 des ersten Strangs 51 beispielsweise Leiterstreifen 20 in dem weiteren ersten Randbereich 26, der dem ersten Statormodul 61 des zweiten Strangs 52 zugewandt ist, bestromt worden wären, hätte das zweite Statormodul 62 des ersten Strangs 51 das dadurch ausgelöste Magnetfeld nicht gemessen. In diesem Fall wären dann weitere erste Steuersignale ausgegeben worden derart, dass beispielsweise Leiterstreifen 20 im ersten Randbereich 25 oder in weiteren ersten Randbereichen 26 des ersten Statormoduls 61 des ersten Strangs 51 bestromt worden wären. Nur durch die Bestromung der Leiterstreifen 20 im ersten Randbereich 25 wird das dadurch ausgelöste Magnetfeld durch die Magnetfeldsensoren des zweiten Statormoduls 62 des ersten Strangs 51 gemessen, so dass nur dann ein positives erstes Detektionssignal vorliegt. Sind keine weiteren ersten Randbereiche 26 des ersten Statormoduls 61 des ersten Strangs 51 vorhanden, also Leiterstreifen 20 auf allen Seiten des ersten Statormoduls 61 des ersten Strangs 51 bestromt worden und es liegt immer noch kein positives erstes Detektionssignal vor, kann davon ausgegangen werden, dass das erste Statormodul 61 des ersten Strangs 51 und das zweite Statormodul 62 des ersten Strangs 51 nicht benachbart angeordnet sind.

In einem Ausführungsbeispiel wird nach dem Ermitteln der ersten Nachbarschaftsbeziehung 7 ein zweites Steuersignal an das zweite Statormodul 62 des ersten Strangs 51 ausgegeben, welches beinhaltet, einen Leiterstreifen 20 in einem zweiten Randbereich 28 des zweiten Statormoduls 62 des ersten Strangs 51 zu bestromen. Somit fungiert dann das zweite Statormodul 62 des ersten Strangs 51 als Sendestatormodul 10. Ein zweites Detektionssignal wird vom dritten Statormodul 63 des ersten Strangs 51 empfangen, wobei das dritte Statormodul 63 und das zweite Statormodul 62 innerhalb einer Kommunikationsstruktur des Kommunikationsbusses benachbart sind, also beide Teil des ersten Strangs 51 sind. Das dritte Statormodul 63 dient in diesem Fall als Empfangsstatormodul 14. Das zweite Detektionssignal ist positiv, wenn ein durch das zweite Steuersignal ausgelöstes Magnetfeld mittels der Magnetfeldsensoren des dritten Statormoduls 63 des ersten Strangs 51 gemessen wird und negativ, wenn das durch das zweite Steuersignal ausgelöste Magnetfeld mittels der Magnetfeldsensoren des dritten Statormoduls 63 des ersten Strangs 51 nicht gemessen wird. Bei einem positiven zweiten Detektionssignal wird eine zweite Nachbarschaftsbeziehung 8 zwischen dem zweiten Statormodul 62 und dem dritten Statormodul 63 des ersten Strangs 51 ermittelt. Bei einem negativen zweiten Detektionssignal werden weitere zweite Steuersignale ausgegeben werden derart, dass weitere Leiterstreifen 20 in weiteren zweiten Randbereichen 29 des zweiten Statormoduls 62 des ersten Strangs 51 bestromt werden, bis entweder ein positives zweites Detektionssignal vorliegt oder keine weiteren zweiten Randbereiche 29 des zweiten Statormoduls 62 des ersten Strangs 51 vorhanden sind.

Während der Ermittlung der ersten Nachbarschaftsbeziehung 7 dient das erste Statormodul 61 also als Sendestatormodul 10 und das zweite Statormodul 62 als Empfangsstatormodul 14. Während der Ermittlung der zweiten Nachbarschaftsbeziehung 8 dient das zweite Statormodul 62 als Sendestatormodul 10 und das dritte Statormodul 63 als Empfangsstatormodul 14.

Innerhalb des ersten Strangs 51 ist das dritte Statormodul 63 ein abschließendes Statormodul 75. Das abschließende Statormodul 75 ist dasjenige, das im Kommunikationspfad 50 am weitesten von der Steuereinheit 5 entfernt angeordnet ist. Es kann vorgesehen sein, dass das Verfahren solange wiederholt wird, bis das abschließende Statormodul 75 als Empfangsstatormodul 14 ausgebildet ist, da nun keine weiteren Nachbarschaftsbeziehungen mehr innerhalb des Kommunikationspfades 50 zu erwarten sind.

Das Verfahren basiert also darauf, dass angenommen wird, dass in der Kommunikationsstruktur benachbarte Statormodule 60 auch räumlich benachbart sind und so nicht die Magnetfeldsensoren 15 aller anderen Statormodule 60 ausgewertet werden müssen, wenn Leiterstreifen 20 in einem Statormodul 60 bestromt werden, sondern nur das in der Kommunikationsstruktur bzw. dem Kommunikationspfad 50 benachbarte Statormodul 60. Dadurch kann das Verfahren effizient durchgeführt werden. Da beim zweiten Statormodul 62 des ersten Strangs 51 die erste Nachbarschaftsbeziehung 7 bereits bekannt ist, müssen im Maximalfall drei entsprechende Steuersignale ausgegeben werden, im Durchschnitt wird die zweite Nachbarschaftsbeziehung 8 nach Ausgabe von zwei zweiten Steuersignalen ermittelt sein. Räumlich benachbart kann dabei auch umfassen, dass ein Spalt mit einer vorgegebenen maximalen Spaltbreite zwischen den benachbarten Statormodulen vorliegt.

In einem Ausführungsbeispiel wird das Verfahren für weitere Statormodule 60 des Kommunikationsbusses durchgeführt.

In einem Ausführungsbeispiel wird vor dem Aussenden des ersten Steuersignals ein Identifikationstelegramm an die Statormodule 60 gesendet wird, wobei den Statormodulen 60 anhand des Identifikationstelegramms eine Statormodulidentifikationsbezeichnung zugeordnet wird. Dies kann beispielsweise innerhalb der Kommunikationspfade 50 erfolgen und für den ersten Strang 51 und den zweiten Strang 52 unabhängig voneinander durchgeführt werden. Wenn der Kommunikationsbus auf EtherCAT basiert oder EtherCAT umfasst, kann dies mittels der in EtherCAT vorgesehenen Auto-Increment-Adressierung erfolgen. Mit der Auto-Increment-Adressierung kann jedes Statormodul 60, beispielsweise des ersten Strangs 51 anhand seiner Position im ersten Strang 51 adressiert werden. Dabei inkrementiert jedes Statormodul 60 ein 16-Bit-Adressfeld während eines Telegrammdurchlaufs, adressiert ist das Statormodul 60, das ein Adressfeld mit dem Wert 0 empfängt. Soll beispielsweise das dritte Statormodul 63 des ersten Strangs 51 angesprochen werden, wird ein Telegramm mit Auto-Increment-Adressierung mit einem Startwert zwei gesendet. Der Startwert wird von jedem Statormodul 60 um eins (oder minus eins) inkrementiert und damit das dritte Statormodul 63 des ersten Strangs 51 addressiert. Die Auto-Increment-Adressierung wird in der Regel nur in einer Startup-Phase benutzt, in der ein Bus-Master, der der Steuereinheit 5 zugeordnet sein kann, Stationsadressen an Slaves, die hier die Statormodule 60 sind, verteilt. Danach können die Statormodule 60 unabhängig von ihrer Position in der Kommunikationsstruktur bzw. dem Kommunikationspfad 50 adressiert werden. Diese Vorgehensweise bietet den Vorteil, dass für die Statormodule 60 keine Statormodulidentifikationsbezeichnungen manuell eingestellt werden müssen. Ein nachträgliches Einfügen von Statormodulen 60 führt nicht zu neuen Statormodulidentifikationsbezeichnungen der bereits vorhandenen Statormodule 60.

In einem Ausführungsbeispiel wird das für den ersten Strang 51 erläuterte Verfahren auch im zweiten Strang 52 oder in weiteren Kommunikationspfaden 50 angewendet.

Fig. 8 zeigt eine isometrische Ansicht eines Planarantriebssystem 1 bestehend aus sechs Statormodulen 60, einem Läufer 2 und einer Steuereinheit 5, wobei die Anordnung der Statormodule 60 der Fig. 7 entspricht. Die Statormodule 60 sind wie in Fig. 7 in einen ersten Strang 51 und einen zweiten Strang 52 von jeweils drei Statormodulen 60, einem ersten Statormodul 61, einem zweiten Statormodul 62 und einem dritten Statormodul 63, angeordnet. Die Steuereinheit 5 ist mittels Kabeln 6 mit den Statormodulen 10 verbunden. Der Läufer 2 kann oberhalb der Statoroberflächen 12 der Statormodule 10 bewegt werden.

In einem Ausführungsbeispiel wird mindestens eine Statormoduleinheit 80 ermittelt, wobei die Statormoduleinheit 80 jeweils aus einem Kommunikationspfad 50 von Statormodulen 60 besteht, wobei die Statormodule 60 des Kommunikationspfads 50 innerhalb des Kommunikationsbusses eine ununterbrochene Verbindung aufweisen und wobei die Statormodule 60 des Kommunikationspfads 50 einen räumlich abgeschlossenen Bereich 16 mit einer durchgehenden Statoroberfläche 17 bilden. In Fig. 8 dargestellt ist eine erste Statormoduleinheit 81, die den ersten Strang 51 umfasst und eine zweite Statormoduleinheit 82, die den zweiten Strang 52 umfasst.

In einem Ausführungsbeispiel werden mehrere Statormoduleinheiten 80 gemäß dem zuvor im Zusammenhang mit der Fig. 7 beschriebenen Verfahren ermittelt. Zu diesem Zeitpunkt ist jedoch noch nicht bekannt, wie die Statormoduleinheiten 80 räumlich zueinander angeordnet sind. Nach der Ermittlung der Statormoduleinheiten 80 werden Einheitsnachbarschaftsbeziehungen 79 durch ein Aussenden von zweiten Steuersignalen ermittelt. In Fig. 8 ist eine Einheitsnachbarschaftsbeziehung 79 zwischen der ersten Statormoduleinheit 81 und der zweiten Statormoduleinheit 82 dargestellt. Diese kann beispielsweise dadurch ermittelt werden, dass ein zweites Steuersignal an das erste Statormodul 61 des ersten Strangs 51 ausgegeben wird, wobei das Statormodul 61 dann als Sendestatormodul 10 fungiert und Leiterstreifen 20 bestromt und das dadurch erzeugte Magnetfeld von Magnetfeldsensoren 15 des ersten Statormoduls 62 des zweiten Strangs 52 gemessen wird. Somit wird die Einheitsnachbarschaftsbeziehung 79 zwischen den Statormoduleinheiten 80 ermittelt. Dieser Teil des Verfahrens funktioniert also ähnlich wie das Ermitteln der Nachbarschaftsbeziehungen 30 innerhalb der Kommunikationspfade 50. Alternativ können die zweiten Steuersignal auch derart ausgegeben werden, dass alle Leiterstreifen 20 innerhalb der ersten Statormoduleinheit 81, für die noch keine Nachbarschaftsbeziehung 30 ermittelt wurden, bestromt werden. Somit fungieren alle Statormodule 60 der ersten Statormoduleinheit 81 als Sendestatormodule 10 und bilden eine Sendestatormoduleinheit. Alle weiteren Statormoduleinheiten 80 fungieren dann als Empfangsstatormoduleinheiten. Dieser Teil des Verfahrens funktioniert also ebenfalls ähnlich wie das Ermitteln der Nachbarschaftsbeziehungen 30 innerhalb der Kommunikationspfade 50, wobei jedoch nun ganze Randbereiche der Statormoduleinheiten 80 entsprechend bestromt und ausgewertet werden. Dabei kann eine Form der Statormoduleinheiten 80 berücksichtigt werden. In einem Ausführungsbeispiel wird das Verfahren in mehreren Kommunikationspfaden 50 parallel durchgeführt.

In einem Ausführungsbeispiel umfasst das erste Steuersignal eine vorgegebene Frequenz, eine Stromstärke und/oder eine Dauer der Bestromung, wobei das Bestromen der Leiterstreifen 20 der Statormodule 60 mit der vorgegebenen Frequenz, Stromstärke und/oder Dauer erfolgt und das erste Detektionssignal hinsichtlich der vorgegebenen Frequenz, Stromstärke und/oder Dauer der Bestromung ausgewertet wird. Die vorgegebene Frequenz kann dabei zwischen zweihundert Hertz und zweitausend Hertz liegen. Dabei kann vorgesehen sein, dass die Auswertung hinsichtlich der Frequenz von der Steuereinheit 5 vorgenommen wird oder von den Statormodulen 60 durchgeführt wird.

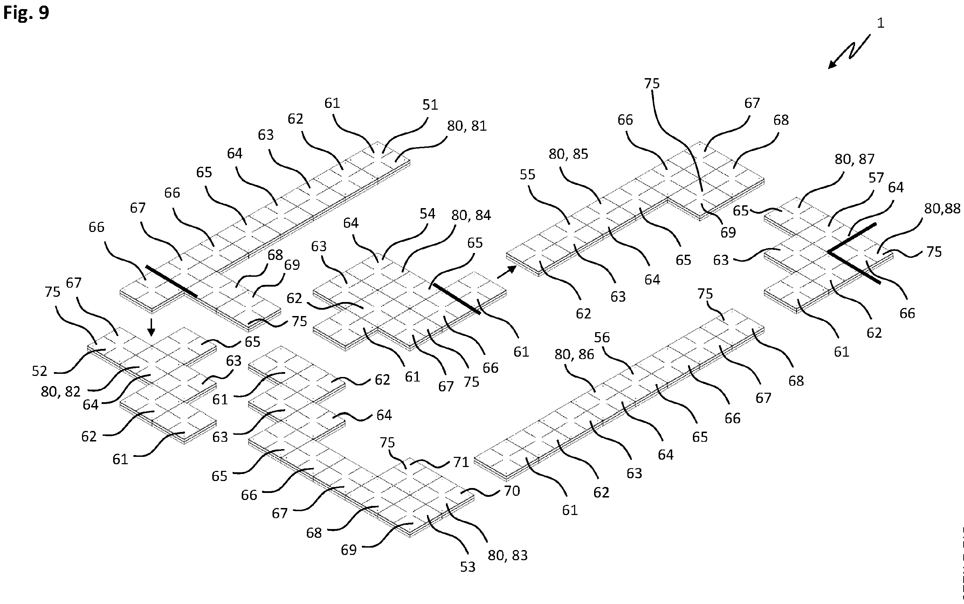

**Fig. 9** zeigt ein Planarantriebssystem 1 bestehend aus mehreren Statormoduleinheiten 80, die jeweils eine Anzahl an Statormodulen umfassen. Eine erste Statormoduleinheit 81 umfasst ein erstes Statormodul 61, ein zweites Statormodul 62, ein drittes Statormodul 63, ein viertes Statormodul 64, ein fünftes Statormodul 65, ein sechstes Statormodul 66, ein siebtes Statormodul 67, ein achtes Statormodul 68 und ein neuntes Statormodul 69, die einen ersten Strang 51 und somit einen Kommunikationspfad 50 bilden. Das neunte Statormodul 69 ist ein den ersten Strang 51 abschließendes Statormodul 75. Eine zweite Statormoduleinheit 82 umfasst ein erstes Statormodul 61, ein zweites Statormodul 62, ein drittes Statormodul 63, ein viertes Statormodul 64, ein fünftes Statormodul 65, ein sechstes Statormodul 66 und ein siebtes Statormodul 67, die einen zweiten Strang 52 und somit einen Kommunikationspfad 50 bilden. Wie durch einen Pfeil angedeutet, befindet sich das sechste Statormodul 66 der zweiten Statormoduleinheit 82 benachbart zu dem fünften Statormodul 65 und dem siebten Statormodul 67 der zweiten Statormoduleinheit 82, und nicht wie in der Fig. 9 dargestellt direkt angrenzend an das siebte Statormodul 67 der ersten Statormoduleinheit 81. Das siebte Statormodul 67 ist ein den zweiten Strang 52 abschließendes Statormodul 75. Eine dritte Statormoduleinheit 83 umfasst ein erstes Statormodul 61, ein zweites Statormodul 62, ein drittes Statormodul 63, ein viertes Statormodul 64, ein fünftes Statormodul 65, ein sechstes Statormodul 66, ein siebtes Statormodul 67, ein achtes Statormodul 68, ein neuntes Statormodul 69, ein zehntes Statormodul 70 und ein elftes Statormodul 71, die einen dritten Strang 53 und somit einen Kommunikationspfad 50 bilden. Das elfte Statormodul 71 ist ein den dritten Strang 53 abschließendes Statormodul 75. Eine vierte Statormoduleinheit 84 umfasst ein erstes Statormodul 61, ein zweites Statormodul 62, ein drittes Statormodul 63, ein viertes Statormodul 64, ein fünftes Statormodul 65, ein sechstes Statormodul 66 und ein siebtes Statormodul 67, die einen vierten Strang 54 und somit einen Kommunikationspfad 50 bilden. Das siebte Statormodul 67 ist ein den vierten Strang 54 abschließendes Statormodul 75. Eine fünfte Statormoduleinheit 85 umfasst ein erstes Statormodul 61, ein zweites Statormodul 62, ein drittes Statormodul 63, ein viertes Statormodul 64, ein fünftes Statormodul 65, ein sechstes Statormodul 66, ein siebtes Statormodul 67, ein achtes Statormodul 68 und ein neuntes Statormodul 69, die einen fünften Strang 55 und somit einen Kommunikationspfad 50 bilden. Wie durch einen Pfeil angedeutet, befindet sich das erste Statormodul 61 der fünften Statormoduleinheit 85 benachbart zu dem zweiten Statormodul 62 der fünften Statormoduleinheit 85, und nicht wie in der Fig. 9 dargestellt direkt angrenzend an das sechste Statormodul 66 der vierten Statormoduleinheit 84. Das neunte Statormodul 69 ist ein den fünften Strang 55 abschließendes Statormodul 75. Eine sechste Statormoduleinheit 86 umfasst ein erstes Statormodul 61, ein zweites Statormodul 62, ein drittes Statormodul 63, ein viertes Statormodul 64, ein fünftes Statormodul 65, ein sechstes Statormodul 66, ein siebtes Statormodul 67 und ein achtes Statormodul 68, die einen sechsten Strang 56 und somit einen Kommunikationspfad 50 bilden. Das achte Statormodul 68 ist ein den sechsten Strang 56 abschließendes Statormodul 75. Eine siebte Statormoduleinheit 87 umfasst ein erstes Statormodul 61, ein zweites Statormodul 62, ein drittes Statormodul 63, ein viertes Statormodul 64 und ein fünftes Statormodul 65, die einen siebten Strang 57 und somit einen Kommunikationspfad 50 bilden. Im siebten Strang 57 ist noch ein sechstes Statormodul 66 angeordnet, welches jedoch nicht zur siebten Statormoduleinheit 87 zugehörig ist, sondern eine achte Statormoduleinheit 88 bildet. Das sechste Statormodul 66 ist ein den siebten Strang 57 abschließendes Statormodul 75.

Innerhalb des ersten Strangs 51, des zweiten Strangs 52, des dritten Strangs 53, des vierten Strangs 54, des fünften Strangs 55, des sechsten Strangs 56 und des siebtes Strangs 57 kann dabei ein Verfahren wie bereits beschrieben durchgeführt werden, um die erste Statormoduleinheit 81, die zweite Statormoduleinheit 82, die dritte Statormoduleinheit 83, die vierte Statormoduleinheit 84, die fünfte Statormoduleinheit 85, die sechste Statormoduleinheit 86 und die siebte Statormoduleinheit 87 zu ermitteln. Im ersten Strang 51 wird beispielsweise ein erstes Steuersignal an das erste Statormodul 61 ausgegeben, ein positives erstes Detektionssignal vom zweiten Statormodul 62 empfangen, anschließend ein erstes Steuersignal an das zweite Statormodul 62 ausgegeben und ein positives zweites Detektionssignal vom dritten Statormodul 63 empfangen, anschließend ein erstes Steuersignal an das dritte Statormodul 63 ausgegeben und ein positives drittes Detektionssignal vom vierten Statormodul 64 empfangen, anschließend ein erstes Steuersignal an das vierte Statormodul 64 ausgegeben und ein positives viertes Detektionssignal vom fünften Statormodul 65 empfangen, anschließend ein erstes Steuersignal an das fünfte Statormodul 65 ausgegeben und ein positives fünftes Detektionssignal vom sechsten Statormodul 66 empfangen, anschließend ein erstes Steuersignal an das sechste Statormodul 66 ausgegeben und ein positives sechstes Detektionssignal vom siebten Statormodul 67 empfangen, anschließend ein erstes Steuersignal an das siebte Statormodul 67 ausgegeben und ein positives siebtes Detektionssignal vom achten Statormodul 68 empfangen und anschließend ein erstes Steuersignal an das achte Statormodul 68 ausgegeben und ein positives achtes Detektionssignal vom neunten Statormodul 69 empfangen. Da, beispielsweise durch das bereits beschriebene Auto-Increment-Verfahren oder durch eine manuelle Addressierung, bekannt ist, dass der erste Strang 51 nicht über das neunte Statormodul 69 hinausgeht, sind an dieser Stelle sämtliche Nachbarschaftsbeziehungen 30 mit der jeweiligen Lage, Position und Orientierung der einzelnen Statormodule 60 innerhalb des ersten Strangs 51 ermittelt. Dabei kann es vorkommen, dass nicht die erste Ausgabe des entsprechenden Steuersignals an eines der Statormodule zu einem positiven Detektionssignal führt, sondern erst eines der entsprechenden weiteren Steuersignale, wenn beispielsweise beim siebten Statormodul 67 zunächst der dem sechsten Statormodul 66 gegenüberliegende Randbereich bestromt wird.

Im zweiten Strang 52, im dritten Strang 53, im vierten Strang 54, im fünften Strang 55 und im sechsten Strang 56 wird das Verfahren analog zum ersten Strang 51 durchgeführt. Im siebten Strang 57 wird das Verfahren wie beschrieben für das erste Statormodul 61, das zweite Statormodul 62, das dritte Statormodul 63 und das vierte Statormodul 64 durchgeführt, ein erstes Steuersignal an das erste Statormodul 61 ausgegeben, ein positives erstes Detektionssignal vom zweiten Statormodul 62 empfangen, anschließend ein erstes Steuersignal an das zweite Statormodul 62 ausgegeben und ein positives zweites Detektionssignal vom dritten Statormodul 63 empfangen, anschließend ein erstes Steuersignal an das dritte Statormodul 63 ausgegeben und ein positives drittes Detektionssignal vom vierten Statormodul 64 empfangen, anschließend ein erstes Steuersignal an das vierte Statormodul 64 ausgegeben und ein positives viertes Detektionssignal vom fünften Statormodul 65 empfangen. Anschließend wird ein erstes Steuersignal an das fünfte Statormodul 65 ausgegeben. Da das sechste Statormodul 66 zwar innerhalb des siebten Strangs 57 in der Kommunikationsstruktur benachbart zum fünften Statormodul 65 ist, nicht jedoch räumlich, wie in Fig. 9 zu sehen, liegt hier kein positives fünftes Detektionssignal vor. Da im siebten Strang 57 das sechste Statormodul 66 das letzte innerhalb des siebten Strangs 57 ist, wird nun keine zusätzliche Nachbarschaftsbeziehung 30 ermittelt. Das erste Statormodul 61, das zweite Statormodul 62, das dritte Statormodul 63, das vierte Statormodul 64 und das fünfte Statormodul 65 bilden die siebte Statormoduleinheit 87, während das sechste Statormodul 66 die achte Statormoduleinheit 88 bildet. Wäre im siebten Strang 57 ein siebtes Statormodul vorhanden, würde das Verfahren für das sechste Statormodul fortgesetzt. Hierbei könnte sich beispielsweise ergeben, dass auch das siebte Statormodul zur achten Statormoduleinheit 88 zugehörig ist.

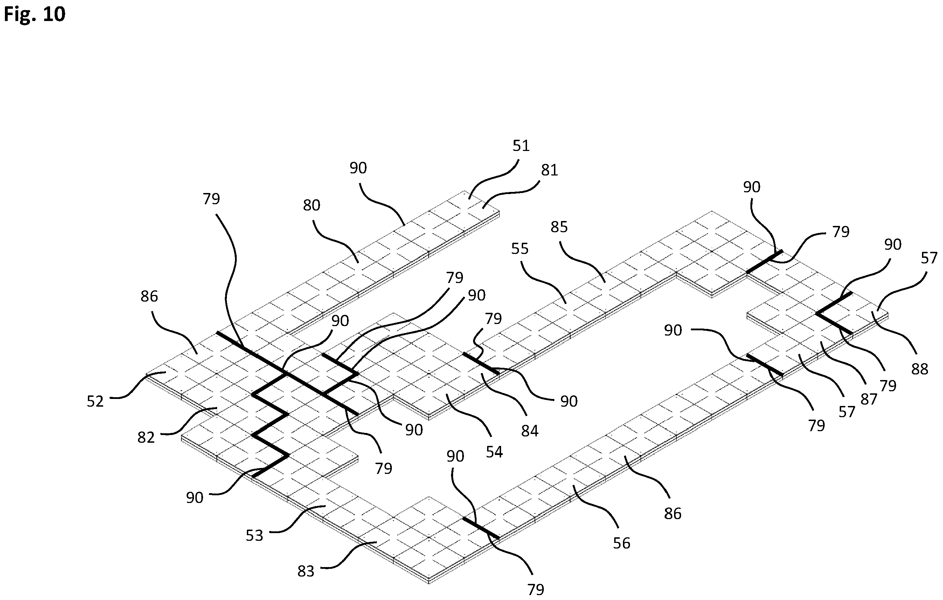

**Fig. 10** zeigt die erste Statormoduleinheit 81, zweite Statormoduleinheit 82, dritte Statormoduleinheit 83, vierte Statormoduleinheit 84, fünfte Statormoduleinheit 85, sechste Statormoduleinheit 86, siebte Statormoduleinheit 87 und achte Statormoduleinheit 88, nachdem mittels eines zuvor beschriebenen Verfahrens beispielsweise mittels zweiten Signalen und/oder Kantensteuersignalen und entsprechenden Detektionssignalen auch Einheitsnachbarschaftsbeziehungen 79 zwischen den Statormoduleinheiten 80 ermittelt wurden.

Dabei kann es vorgesehen sein, dass an Kanten 90 der Statormoduleinheiten 80 angeordnete Leiterstreifen 20 bestromt werden und dadurch erzeugte Magnetfelder durch Magnetfeldsensoren 15 in anderen Statormoduleinheiten gemessen werden und so die Einheitsnachbarschaftsbeziehungen 79 festgestellt werden.

Es kann vorgesehen sein, dass zunächst die Einheitsnachbarschaftsbeziehung 79 zwischen der siebten Statormoduleinheit 87 und der achten Statormoduleinheit 88 ermittelt wird. Dem kann die Annahme zugrunde liegen, dass durch die Anordnung der siebten Statormoduleinheit 87 und der achten Statormoduleinheit 88 im siebten Strang 57 eine räumliche Nähe der siebten Statormoduleinheit 87 und der achten Statormoduleinheit 88 vorliegt.

In einem Ausführungsbeispiel wird zusätzlich ein Steuersignal ausgegeben, mit dem ein Läufer 2 über eine festgestellte Nachbarschaftsbeziehung 30 und/oder Einheitsnachbarschaftsbeziehung 79 gesteuert wird.

In einem Ausführungsbeispiel wird nach der Ermittlung der Nachbarschaftsbeziehung 30 und/oder einer Einheitsnachbarschaftsbeziehung 79 ein Läufersteuersignal ausgegeben. Ein Läufer 2 kann aufgrund des Läufersteuersignals von einem Statormodul 60 zu einem weiteren Statormodul 60 beziehungsweise vom ersten Statormodul 61 zum zweiten Statormodul 62 beziehungsweise von ersten Statormoduleinheit 81 zum zweiten Statormoduleinheit 82 bewegt werden. Die ermittelte Nachbarschaftsbeziehung 30 ermöglicht es, ein Wanderfeld von einem Statormodul 60 zu einem weiteren Statormodul 60 beziehungsweise vom ersten Statormodul 61 zum zweiten Statormodul 62 beziehungsweise von ersten Statormoduleinheit 81 zum zweiten Statormoduleinheit 82 zu bewegen und dadurch eine Läuferbewegung zu steuern.

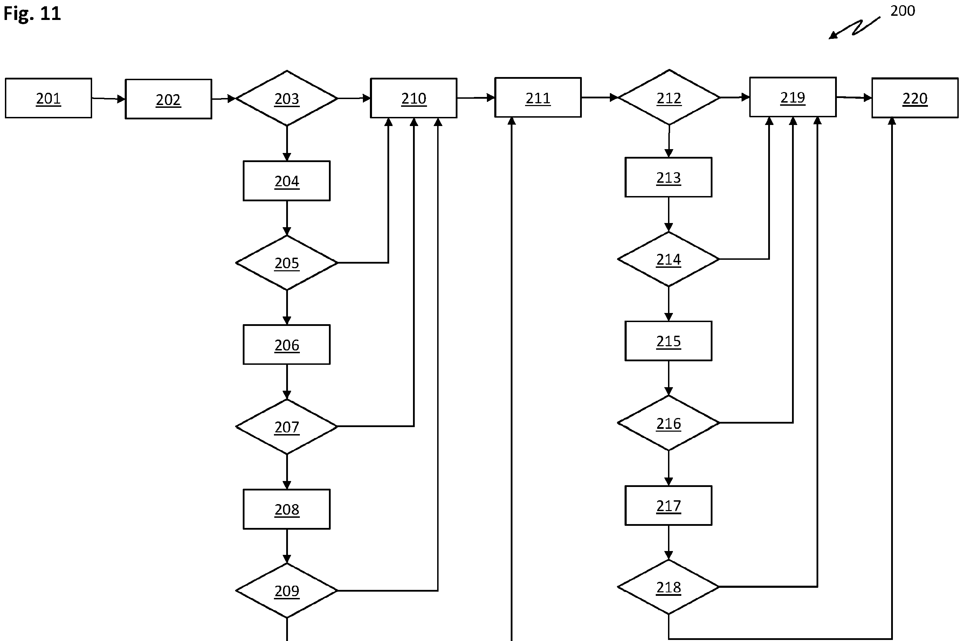

**Fig. 11** zeigt einen Verfahrensablauf 200 eines Konfigurationsverfahrens, wobei Nachbarschaftsbeziehungen 30 innerhalb eines der in den Fig. 7 bis 10 gezeigten Kommunikationspfaden 50 ermittelt werden sollen. In einem optionalen Adressierungsschritt 201 kann eine Adressierung der Statormodule 60 innerhalb des Kommunikationspfades 50 wie bereits beschrieben, beispielsweise durch das Auto-Increment-Verfahren, erfolgen. In einem ersten Ausgabe- und Empfangsschritt 202 wird ein erstes Steuersignal an ein erstes Statormodul 61 des Kommunikationspfades 50 ausgegeben, wobei das erste Steuersignal beinhaltet, Leiterstreifen 20 in einem ersten Randbereich 25 des ersten Statormoduls 61 zu bestromen und ein Signal eines zweiten Statormoduls 62 zu empfangen. In einem ersten Entscheidungsschritt 203 wird überprüft, ob ein positives erstes Detektionssignal vorliegt. Ein positives erstes Detektionssignal liegt vor, wenn das durch das erste Steuersignal ausgelöste Bestromen der Leiterstreifen 20 des ersten Statormoduls 61 zu einer Messung eines Magnetfelds durch Magnetfeldsensoren 15 des zweiten Statormoduls 62 geführt hat. Liegt ein positives erstes Detektionssignal vor, wird in einem ersten Ermittlungsschritt 210 eine erste Nachbarschaftsbeziehung 7 ermittelt.

Liegt jedoch kein positives erstes Detektionssignal vor, wird in einem zweiten Ausgabe- und Empfangsschritt 204 ein weiteres erstes Steuersignal an das erstes Statormodul 61 des Kommunikationspfades 50 ausgegeben, wobei das weitere erste Steuersignal beinhaltet, weitere Leiterstreifen 20 in einem weiteren ersten Randbereich 26 des ersten Statormoduls 61 zu bestromen und ein Signal eines zweiten Statormoduls 62 zu empfangen. In einem zweiten Entscheidungsschritt 205 wird überprüft, ob ein positives erstes Detektionssignal vorliegt. Liegt ein positives erstes Detektionssignal vor, wird im ersten Ermittlungsschritt 210 die erste Nachbarschaftsbeziehung 7 ermittelt.

Liegt jedoch kein positives erstes Detektionssignal vor, wird in einem dritten Ausgabe- und Empfangsschritt 206 ein weiteres erstes Steuersignal an das weitere erstes Statormodul 61 des Kommunikationspfades 50 ausgegeben, wobei das erste Steuersignal beinhaltet, weitere Leiterstreifen 20 in einem weiteren ersten Randbereich 26 des ersten Statormoduls 61 zu bestromen und ein Signal eines zweiten Statormoduls 62 zu empfangen. In einem dritten Entscheidungsschritt 207 wird überprüft, ob ein positives erstes Detektionssignal vorliegt. Liegt ein positives erstes Detektionssignal vor, wird im ersten Ermittlungsschritt 210 die erste Nachbarschaftsbeziehung 7 ermittelt.

Liegt jedoch kein positives erstes Detektionssignal vor, wird in einem vierten Ausgabe- und Empfangsschritt 208 ein weiteres erstes Steuersignal an das erstes Statormodul 61 des Kommunikationspfades 50 ausgegeben, wobei das weitere erste Steuersignal beinhaltet, weitere Leiterstreifen 20 in einem weiteren ersten Randbereich 26 des ersten Statormoduls 61 zu bestromen und ein Signal eines zweiten Statormoduls 62 zu empfangen. In einem vierten Entscheidungsschritt 209 wird überprüft, ob ein positives erstes Detektionssignal vorliegt. Liegt ein positives erstes Detektionssignal vor, wird im ersten Ermittlungsschritt 210 die erste Nachbarschaftsbeziehung 7 ermittelt. In Abhängigkeit einer Ausbildung der Statormodule können auch mehr oder weniger Ausgabe- und Empfangsschritte vorgesehen sein. Bei Statormodulen mit vier Außenkanten passt die vorherige Beschreibung. Bei Statormodulen mit beispielsweise fünf Außenkanten käme ein analoger Ausgabe- und Empfangsschritt in dem Verfahrensablauf hinzu.

Anschließend wird in einem fünften Ausgabe- und Empfangsschritt 211 ein erstes Steuersignal an das zweite Statormodul 62 des Kommunikationspfades 50 ausgegeben, wobei das erste Steuersignal beinhaltet, Leiterstreifen 20 in einem zweiten Randbereich 28 des zweiten Statormoduls 62 zu bestromen und ein Signal eines dritten Statormoduls 63 zu empfangen. Der fünften Ausgabe- und Empfangsschritt 211 wird auch durchgeführt, wenn der vierte Entscheidungsschritt 209 zu keinem positiven ersten Detektionssignal geführt hat, hier wird dann der erste Ermittlungsschritt 210 ausgelassen. In einem fünften Entscheidungsschritt 212 wird überprüft, ob ein positives zweites Detektionssignal vorliegt. Ein positives zweites Detektionssignal liegt vor, wenn das durch das zweite Steuersignal ausgelöste Bestromen der Leiterstreifen 20 des zweiten Statormoduls 62 zu einer Messung eines Magnetfelds durch Magnetfeldsensoren 15 des dritten Statormoduls 63 geführt hat. Liegt ein positives zweites Detektionssignal vor, wird in einem zweiten Ermittlungsschritt 219 eine zweite Nachbarschaftsbeziehung 8 ermittelt.

Liegt jedoch kein positives zweites Detektionssignal vor, wird in einem sechsten Ausgabe- und Empfangsschritt 213 ein weiteres erstes Steuersignal an das zweite Statormodul 62 des Kommunikationspfades 50 ausgegeben, wobei das weitere erste Steuersignal beinhaltet, weitere Leiterstreifen 20 in einem weiteren zweiten Randbereich 29 des zweiten Statormoduls 62 zu bestromen und ein Signal eines dritten Statormoduls 63 zu empfangen. In einem sechsten Entscheidungsschritt 214 wird überprüft, ob ein positives zweites Detektionssignal vorliegt. Liegt ein positives zweites Detektionssignal vor, wird im zweiten Ermittlungsschritt 219 die zweite Nachbarschaftsbeziehung 8 ermittelt.

Liegt jedoch kein positives zweites Detektionssignal vor, wird in einem siebten Ausgabe- und Empfangsschritt 215 ein weiteres erstes Steuersignal an das zweite Statormodul 62 des Kommunikationspfades 50 ausgegeben, wobei das weitere erste Steuersignal beinhaltet, weitere Leiterstreifen 20 in einem weiteren zweiten Randbereich 29 des zweiten Statormoduls 62 zu bestromen und ein Signal eines dritten Statormoduls 63 zu empfangen. In einem siebten Entscheidungsschritt 216 wird überprüft, ob ein positives zweites Detektionssignal vorliegt. Liegt ein positives zweites Detektionssignal vor, wird im zweiten Ermittlungsschritt 219 die zweite Nachbarschaftsbeziehung 8 ermittelt.

Liegt jedoch kein positives zweites Detektionssignal vor, wird in einem achten Ausgabe- und Empfangsschritt 217 ein weiteres zweites Steuersignal an das zweite Statormodul 62 des Kommunikationspfades 50 ausgegeben, wobei das weitere zweite Steuersignal beinhaltet, weitere Leiterstreifen 20 in einem weiteren zweiten Randbereich 29 des zweiten Statormoduls 62 zu bestromen und ein Signal eines dritten Statormoduls 63 zu empfangen. In einem achten Entscheidungsschritt 218 wird überprüft, ob ein positives zweites Detektionssignal vorliegt. Liegt ein positives zweites Detektionssignal vor, wird im zweiten Ermittlungsschritt 219 die erste Nachbarschaftsbeziehung 8 ermittelt.

Fortgeführt werden kann das Verfahren dann mit einem neunten Ausgabe- und Empfangsschritt 220, bei dem ein erstes Steuersignal an das dritte Statormodul 63 ausgegeben und ein Signal eines vierten Statormoduls 64 empfangen wird. Ab hier wiederholen sich die entsprechenden Verfahrensschritte, bis sämtliche Statormodule 60 des Kommunikationspfades 50 berücksichtigt wurden beziehungsweise bis ein Signal vom letzten der Statormodule 60 des Kommunikationspfades 50 empfangen wurde.

Solange Nachbarschaftsbeziehungen 30 zwischen im Kommunikationspfad 50 benachbarten Statormodulen 60 festgestellt werden, können diese Statormodule 60 dann den Statormoduleinheiten 80 der Fig. 8 bis 10 zugeordnet werden.

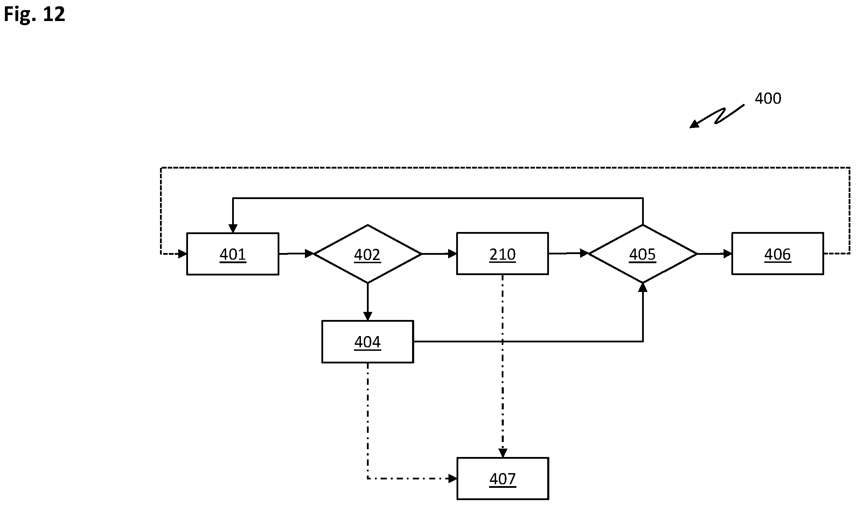

**Fig. 12** zeigt einen weiteren Verfahrensablauf 400 eines alternativen Konfigurationsverfahrens, wobei Nachbarschaftsbeziehungen 30 innerhalb eines Planarantriebssystems 1 ermittelt werden sollen. In einem ersten Ausgabeschritt 401 wird ein erstes Steuersignal an ein beliebiges Statormodul 60 des Planarantriebssystems 1 ausgegeben, wobei das Statormodul 60 dann als Sendestatormodul 10 fungiert und alle weiteren Statormodule 60 des Planarantriebssystems 1 als Empfangsstatormodule 14 fungieren. Das erste Steuersignal beinhaltet, Leiterstreifen 20 in einem ersten Randbereich 25 des Sendestatormoduls 20 zu bestromen. In einem ersten Überprüfungsschritt 402 wird ermittelt, ob eines der Empfangsstatormodule 14 ein Detektionssignal aufgrund des Magnetfeldes empfangen hat. Wird ein Detektionssignal von einem Randbereich eines der Empfangsstatormodule 14 empfangen, wird in einem ersten Ermittlungsschritt 210 eine Nachbarschaftsbeziehung 30 zwischen den beiden Statormodulen ermittelt und beispielweise als erste Nachbarschaftsbeziehung 7 festgelegt. Wird in dem ersten Überprüfungsschritt 402 ermittelt, dass keines der Empfangsstatormodule 14 ein Detektionssignal empfangen hat, so wird in einem Festlegungsschritt 404 der entsprechende erste Randbereich 25 des Sendestatormoduls 10 als Außengrenze des Planarantriebssystems 1 ermittelt.

Entweder nach der Ermittlung einer Nachbarschaftsbeziehung 30 in dem ersten Ermittlungsschritt 210 oder nach dem Ermitteln einer Außengrenze im Festlegungsschritt 404 wird in einem zweiten Überprüfungsschritt 405 überprüft, ob bei dem Sendestatormodul 10 zu allen Randbereichen eine Überprüfung auf eine Nachbarschaftsbeziehung 30 oder eine Außengrenze durchgeführt wurde. Ist diese Überprüfung noch nicht für alle Randbereiche durchgeführt worden, springt der Verfahrensablauf 400 für die noch nicht überprüften Randbereiche zurück in den ersten Ausgabeschritt 401. Wird in dem zweiten Überprüfungsschritt 405 festgestellt, dass eine Überprüfung auf eine Nachbarschaftsbeziehung 30 oder eine Außengrenze für alle Randbereiche des Sendestatormoduls 10 durchgeführt wurde, so erfolgt in einem Wechselschritt 406 ein Wechsel der Funktion der Statormodule 60 des Planarantriebssystems 1 derart, dass ein anderes der Statormodule 60 als Sendestatormodul 10 und alle weiteren Statormodule 60 dann als Empfangsstatormodule 14 fungieren. Anschließend springt der Verfahrensablauf 400 für das nun festgelegte Sendestatormodul 10 zurück in den ersten Ausgabeschritt 401.

Die mit dem Verfahrensablauf 400 in dem ersten Ermittlungsschritt 210 ermittelten Nachbarschaftsbeziehungen 30, insbesondere die Lage, Position und Orientierung der einzelnen Nachbarschaftsbeziehungen 30, und/oder die in dem zweiten Festlegungsschritt 404 ermittelten Außengrenzen des Planarantriebssystems 1 können in einem Ablageschritt 407 in einer Referenztabelle abgelegt werden, so dass die Steuereinheit 5 ein Steuersignal ausgegeben kann, mit dem ein Läufer 2 über eine festgestellte Nachbarschaftsbeziehung 30 gesteuert wird.

Die in der Referenztabelle abgelegten Informationen können in einer Ausführungsform auch dazu verwendet werden, in dem zweiten Überprüfungsschritt 405 den Verfahrensablauf 400 nur für die Randbereiche des Sendestatormoduls 10 zu wiederholen, für die noch keine Informationen in der Referenztabelle abgelegt sind oder durch andere Informationen innerhalb der Referenztabelle abgeleitet werden können.

Die in der Referenztabelle abgelegten Informationen können in einer Ausführungsform auch weiterhin dazu verwendet werden, in dem Wechselschritt 406 den Verfahrensablauf 400 nur für die Statormodule 60 als Sendestatormodule 10 zu wiederholen, für die noch keine Informationen in der Referenztabelle abgelegt sind oder durch andere Informationen innerhalb der Referenztabelle abgeleitet werden können.

In allen Ausgestaltungen des Verfahrens kann vorgesehen sein, die Statormodule 60 zueinander zeitlich zu synchronisieren, um ein durch das erste Steuersignal beziehungsweise zweite Steuersignal ausgelöstes Magnetfeld und eine Detektion dieses Magnetfeld mittels Magnetfeldsensor einander zuordnen zu können.

## Patentansprüche

1. Verfahren zum Konfigurieren eines Planarantriebssystems (1), wobei das Planarantriebssystem (1) mehrere aneinander angrenzende Statormodule (60) zum Antrieb von zumindest einem Läufer (2) aufweist, wobei jeweils zumindest zwei Statormodule (60) einander zugewandte Außenkanten (100) aufweisen und dadurch eine räumliche Nachbarschaftsbeziehung (30) zwischen den zumindest zwei Statormodulen (60) besteht, wobei die Statormodule (60) jeweils Leiterstreifen (20) zur Erzeugung eines Magnetfelds und jeweils Magnetfeldsensoren (15) zum Erfassen eines Magnetfelds aufweisen, **gekennzeichnet durch** die folgenden Schritte:
- Ausgabe eines ersten Steuersignals in einem ersten Ausgabeschritt an zumindest ein Sendestatormodul (10) der Statormodule (60), wobei das erste Steuersignal beinhaltet, dass im Sendestatormodul (10) mindestens ein Leiterstreifen (20) bestromt werden soll;
- Empfangen eines positiven ersten Detektionssignals von einem Empfangsstatormodul (14) der Statormodule (60), wobei das positive erste Detektionssignal beinhaltet, dass mindestens ein Magnetfeldsensor (15) des Empfangsstatormoduls (14) ein Magnetfeld ermittelt hat;
- Ermitteln einer Nachbarschaftsbeziehung (30) zwischen dem Sendestatormodul (10) und dem Empfangsstatormodul (14) in einem ersten Ermittlungsschritt (210), wobei bei der Ermittlung der Nachbarschaftsbeziehung (30) das erste Steuersignal und das positive erste Detektionssignal berücksichtigt werden.

2. Verfahren nach Anspruch 1, wobei das Verfahren solange wiederholt wird, bis sämtliche Nachbarschaftsbeziehungen (30) zwischen allen Statormodulen (60) ermittelt sind, wobei die Statormodule (60) sowohl als Sendestatormodule (10) als auch als Empfangsstatormodule (14) ausgebildet sind bzw. fungieren.

3. Verfahren nach einem der vorstehenden Ansprüche, wobei die Statormodule (60) über einen Kommunikationsbus datentechnisch miteinander verbunden sind, wobei das erste Steuersignal und das erste positive Detektionssignal Teil eines Telegramms oder mehrerer Telegramme des Kommunikationsbusses sind.

4. Verfahren nach Anspruch 3, wobei einzelne oder eine Mehrzahl an Statormodulen (60) des Planarantriebssystems (1) an jeweils einen Kommunikationspfad (50) des Kommunikationsbusses in einer Linientopologie angebunden sind, wobei der Kommunikationspfad (50) eine ununterbrochene Kommunikationsverbindung aufweist und wobei die Statormodule (60) eines Kommunikationspfades (50) einen räumlich abgeschlossenen Bereich (16) mit einer durchgehenden Statoroberfläche (17) des Planarantriebssystems (1) bilden, wobei das Planarantriebssystem (1) einen oder mehrere Kommunikationspfade (50) des Kommunikationsbusses aufweisen kann.

5. Verfahren nach Anspruch 4, wobei für jeden Kommunikationspfad (50) des Kommunikationsbusses die Nachbarschaftsbeziehungen (30) innerhalb des Kommunikationspfades (50) derart ermittelt werden, dass ein erstes Statormodul (61) des Kommunikationspfades (50) zunächst als Sendestatormodul (10) festgelegt wird und ein zweites Statormodul (62) des Kommunikationspfades (50) zunächst als Empfangsstatormodul (14) festgelegt wird, wobei das erste Steuersignal beinhaltet, mindestens einen ersten Leiterstreifen (31) der Leiterstreifen (20) in einem ersten Randbereich (25) des Sendestatormoduls (10) zu bestromen, wobei das erste positive Detektionssignal ermittelt wird, wenn ein durch das erste Steuersignal ausgelöstes Magnetfeld mittels der Magnetfeldsensoren (15) des Empfangsstatormoduls (14) gemessen wird und so die Nachbarschaftsbeziehung (30) als erste Nachbarschaftsbeziehung (7) entlang des ersten Randbereichs (25) des Sendestatormoduls (10) zwischen dem Sendestatormodul (10) und dem Empfangsstatormodul (14) der Statormodule (60) ermittelt wird und wobei wenn kein durch das erste Steuersignal ausgelöstes Magnetfeld mittels der Magnetfeldsensoren (15) des Empfangsstatormoduls (14) gemessen wird, keine erste Nachbarschaftsbeziehung (7) entlang des ersten Randbereichs (25) des Sendestatormoduls (10) zwischen dem Sendestatormodul (10) und dem Empfangsstatormodul (14) der Statormodule (60) ermittelt wird, wobei beim Nicht-Ermitteln der ersten Nachbarschaftsbeziehung (7) weitere erste Steuersignale nacheinander ausgegeben werden derart, dass weitere erste Leiterstreifen (32) der Leiterstreifen (20) in weiteren ersten Randbereichen (26) des Sendestatormoduls (10) bestromt werden, bis eine erste Nachbarschaftsbeziehung (7) zwischen dem Sendestatormodul (10) und dem Empfangsstatormodul (14) ermittelt wurde oder keine weiteren ersten Randbereiche (26) des Sendestatormoduls (10) vorhanden sind, wobei nach der Ermittlung der ersten Nachbarschaftsbeziehung (7) das zweite Statormodul (62) als Sendestatormodul (10) und ein drittes Statormodul (63) des Kommunikationspfades (50)als Empfangsstatormodul (14) festgelegt wird und das Verfahren solange wiederholt wird, bis ein den Kommunikationspfad (50) abschließendes Statormodul (75) des Kommunikationspfades (50) als Empfangsstatormodul (14) festgelegt wird und somit keine weiteren Nachbarschaftsbeziehungen (30) zwischen Statormodulen (60) des Kommunikationspfades (50) ermittelt werden können.

6. Verfahren nach Anspruch 5, wobei das Planarantriebssystem (1) mehrere Kommunikationspfade (50) aufweist, die jeweils eine Statormoduleinheit (80) bilden, wobei jeweils zumindest zwei Statormodule (60) von verschiedenen Statormoduleinheiten (80) einander zugewandte Außenkanten (100) aufweisen und dadurch eine räumliche Einheitsnachbarschaftsbeziehung (79) zwischen den zumindest zwei Statormoduleinheiten (80) besteht, wobei zur Ermittlung der Lage und der Position der Einheitsnachbarschaftsbeziehungen (79) eine Statormoduleinheit (80) als Sendestatormoduleinheit und eine andere Statormoduleinheit (80) als Empfangsstatormoduleinheit festgelegt wird, wobei ein zweites Steuersignal ausgegeben wird derart, dass in der Sendestatormoduleinheit nacheinander die ersten Leiterstreifen (31) und/oder die weiteren ersten Leiterstreifen (32) der Leiterstreifen (20) in einem ersten Randbereich (25) und/oder einem weiteren ersten Randbereich (26) der Sendestatormodule (10) der Sendestatormoduleinheit bestromt werden, für die innerhalb des Kommunikationspfades (50) keine Nachbarschaftsbeziehung (30) ermittelt wurde, wobei ein zweites positives Detektionssignal ermittelt wird, wenn ein durch das zweite Steuersignal ausgelöstes Magnetfeld mittels der Magnetfeldsensoren (15) der Empfangsstatormodule (14) der Empfangsstatormoduleinheit gemessen wird und so die Einheitsnachbarschaftsbeziehung (79) zwischen der Sendestatormoduleinheit und der Empfangsstatormoduleinheit der Statormoduleinheiten (80) ermittelt wird und wobei wenn kein durch das zweite Steuersignal ausgelöstes Magnetfeld mittels der Magnetfeldsensoren (15) der Empfangsstatormoduleinheit gemessen wird, keine Einheitsnachbarschaftsbeziehung (79) zwischen der Sendestatormoduleinheit und der Empfangsstatormoduleinheit der Statormoduleinheiten (80) ermittelt wird, wobei das Verfahren wiederholt wird, bis alle Einheitsnachbarschaftsbeziehung (79) zwischen den Statormoduleinheiten (80) des Planarantriebssystems (1) ermittelt wurden.

7. Verfahren nach Anspruch 6, wobei das zweite Steuersignal beinhaltet, dass zeitgleich alle ersten Leiterstreifen (31) und/oder weiteren ersten Leiterstreifen (32) der Leiterstreifen (20) in einem ersten Randbereich (25) und/oder in den weiteren ersten Randbereichen (26) der Sendestatormodule (10) der Sendestatormoduleinheit bestromt werden, für die innerhalb des Kommunikationspfades (50) keine Nachbarschaftsbeziehung (30) ermittelt wurde.

8. Verfahren nach einem der Ansprüche 1 bis 3, wobei das erste Steuersignal beinhaltet, mindestens einen Leiterstreifen (20) in einem ersten Randbereich (25) des Sendestatormoduls (10) zu bestromen, wobei die Magnetfeldsensoren (15) zumindest teilweise Randbereichen (28) der Statormodule (60) zugeordnet sind und wobei anhand der Stärke des mittels der Magnetfeldsensoren (15) gemessenen Magnetfelds das positive erste Detektionssignal ermittelt und somit die Nachbarschaftsbeziehung (30), sowie eine Lage und Position des Empfangsstatormoduls (14) relativ zum Sendestatormodul (10) bestimmt wird.

9. Verfahren nach Anspruch 8, wobei das erste Steuersignal beinhaltet, mindestens einen ersten Leiterstreifen (31) der Leiterstreifen (20) in einem ersten Randbereich (25) des Sendestatormoduls (10) zu bestromen, wobei das erste positive Detektionssignal ermittelt wird, wenn ein durch das erste Steuersignal ausgelöstes Magnetfeld mittels der Magnetfeldsensoren (15) des Empfangsstatormoduls (14) gemessen wird und so die Nachbarschaftsbeziehung (30) als erste Nachbarschaftsbeziehung (7) ermittelt wird und wobei wenn kein durch das erste Steuersignal ausgelöstes Magnetfeld mittels der Magnetfeldsensoren (15) des Empfangsstatormoduls (14) gemessen wird keine erste Nachbarschaftsbeziehung (7) zwischen dem Sendestatormodul (10) und dem Empfangsstatormodul (14) der Statormodule (60) ermittelt wird, wobei nach dem Ermitteln bzw. Nicht-Ermitteln der ersten Nachbarschaftsbeziehung (7) weitere erste Steuersignale nacheinander ausgegeben werden derart, dass weitere erste Leiterstreifen (32) der Leiterstreifen (20) in weiteren ersten Randbereichen (26) des Sendestatormoduls (10) bestromt werden, bis entweder weitere Nachbarschaftsbeziehungen (30) zu weiteren Empfangsstatormodulen (14) ermittelt bzw. nicht ermittelt wurden oder keine weiteren ersten Randbereiche (26) des Sendestatormoduls (10) vorhanden sind.

10. Verfahren nach Anspruch 8 oder 9, wobei das Planarantriebssystem (1) eine Mehrzahl an Statormodulen (60) aufweist, wobei ein Statormodul (60) als Sendestatormodul (10) fungiert und alle weiteren Statormodule (60) gleichzeitig als Empfangsstatormodule (14) fungieren, wobei das erste Steuersignal beinhaltet, mindestens einen ersten Leiterstreifen (31) der Leiterstreifen (20) in einem ersten Randbereich (25) des Sendestatormoduls (10) zu bestromen, wobei das erste positive Detektionssignal ermittelt wird, wenn ein durch das erste Steuersignal ausgelöstes Magnetfeld mittels der Magnetfeldsensoren (15) eines der Empfangsstatormodule (14) gemessen wird und so die Nachbarschaftsbeziehung (30) als erste Nachbarschaftsbeziehung (7) zwischen dem Sendestatormodul (10) und dem das Magnetfeld messende Empfangsstatormodul (14) ermittelt wird und wobei wenn kein durch das erste Steuersignal ausgelöstes Magnetfeld mittels der Magnetfeldsensoren (15) der Empfangsstatormodule (14) gemessen wird die dem ersten Randbereich (25) des Sendestatormoduls (10) zugeordnete Außenkante als Außengrenze des Planarantriebssystems (1) ermittelt wird.

11. Verfahren nach Anspruch 10, wobei das Verfahren zunächst für die weiteren ersten Randbereiche (26) des Sendestatormoduls (10) wiederholt wird, bis für das Sendestatormodul (10) alle Nachbarschaftsbeziehungen (30) bzw. Außengrenzen ermittelt sind, wobei dann ein anderes Statormodul (60) des Planarantriebssystems (1) als Sendestatormodul (10) fungiert und alle weiteren Statormodule (60) gleichzeitig als Empfangsstatormodule (14) fungieren, und das Verfahren wiederholt wird, bis für alle Statormodule alle Nachbarschaftsbeziehungen (30) bzw. Außengrenzen ermittelt sind.

12. Verfahren nach Anspruch 11, wobei die ermittelten Nachbarschaftsbeziehungen (30) bzw. Außengrenzen des Planarantriebssystems (1) parallel in einer Referenztabelle abgelegt werden und die Ermittlung der Nachbarschaftsbeziehungen (30) bzw. Außenkanten nur noch für die Statormodule (60) durchgeführt wird, deren Nachbarschaftsbeziehungen (30) bzw. Außenkanten noch nicht ermittelt wurden oder sich aus den ermittelten Nachbarschaftsbeziehungen (30) bzw. Außenkanten von anderen Statormodulen (60) ergeben.

13. Steuereinheit (5), aufweisend eine Recheneinheit (18) und einen Kommunikationsanschluss (19), wobei Steuersignale über den Kommunikationsanschluss (19) ausgegeben werden können und Detektionssignale über den Kommunikationsanschluss (19) empfangen werden können, wobei die Recheneinheit (18) eingerichtet ist, eines der Verfahren der Ansprüche 1 bis 12 durchzuführen.

14. Computerprogramm, umfassend Programmcode, der ausgeführt auf einer Recheneinheit (18) die Recheneinheit (18) dazu veranlasst, das Verfahren nach einem der Ansprüche 1 bis 12 auszuführen.

15. Planarantriebssystem (1) mit mehreren Statormodulen (60), mindestens einem Läufer (2) und der Steuereinheit (5) nach Anspruch 13.

## Claims

1. Method for configuring a planar drive system (1), wherein the planar drive system (1) comprises a plurality of stator modules (60) adjacent to one another for driving at least one rotor (2), wherein in each case at least two stator modules (60) comprise outer edges (100) facing one another and as a result there is a spatial neighbourhood relationship (30) between the at least two stator modules (60), wherein the stator modules (60) each comprise conductor strips (20) for generating a magnetic field and each comprise magnetic field sensors (15) for detecting a magnetic field, **characterized by** the following steps:
- outputting a first control signal in a first output step to at least one transmission stator module (10) of the stator modules (60), wherein the first control signal comprises the fact that in the transmission stator module (10) at least one conductor strip (20) is intended to be energized;
- receiving a positive first detection signal by a reception stator module (14) of the stator modules (60), wherein the positive first detection signal comprises the fact that at least one magnetic field sensor (15) of the reception stator module (14) has determined a magnetic field;
- determining a neighbourhood relationship (30) between the transmission stator module (10) and the reception stator module (14) in a first determining step (210), wherein the first control signal and the positive first detection signal are taken into account when determining the neighbourhood relationship (30).

2. Method according to Claim 1, wherein the method is repeated until all neighbourhood relationships (30) between all stator modules (60) have been determined, wherein the stator modules (60) are formed or function both as transmission stator modules (10) and as reception stator modules (14).

3. Method according to either of the preceding claims, wherein the stator modules (60) are connected to one another using data technology via a communication bus, wherein the first control signal and the first positive detection signal are part of one message or a plurality of messages of the communication bus.

4. Method according to Claim 3, wherein individual or a plurality of stator modules (60) of the planar drive system (1) are linked to a respective communication path (50) of the communication bus in a line topology, wherein the communication path (50) comprises an uninterrupted communication connection, and wherein the stator modules (60) of a communication path (50) constitute a spatially self-contained region (16) with a continuous stator surface (17) of the planar drive system (1), wherein the planar drive system (1) may comprise one or more communication paths (50) of the communication bus.

5. Method according to Claim 4, wherein for each communication path (50) of the communication bus the neighbourhood relationships (30) within the communication path (50) are determined in such a way that a first stator module (61) of the communication path (50) is initially defined as a transmission stator module (10) and a second stator module (62) of the communication path (50) is initially defined as a reception stator module (14), wherein the first control signal comprises energizing at least one first conductor strip (31) of the conductor strips (20) in a first edge region (25) of the transmission stator module (10), wherein the first positive detection signal is determined if a magnetic field triggered by the first control signal is measured by means of the magnetic field sensors (15) of the reception stator module (14) and the neighbourhood relationship (30) is thus determined as the first neighbourhood relationship (7) along the first edge region (25) of the transmission stator module (10) between the transmission stator module (10) and the reception stator module (14) of the stator modules (60), and wherein, if no magnetic field triggered by the first control signal is measured by means of the magnetic field sensors (15) of the reception stator module (14), no first neighbourhood relationship (7) is determined along the first edge region (25) of the transmission stator module (10) between the transmission stator module (10) and the reception stator module (14) of the stator modules (60), wherein, in the event of the first neighbourhood relationship (7) not being determined, further first control signals are output successively in such a way that further first conductor strips (32) of the conductor strips (20) in further first edge regions (26) of the transmission stator module (10) are energized until a first neighbourhood relationship (7) between the transmission stator module (10) and the reception stator module (14) has been determined or no further first edge regions (26) of the transmission stator module (10) are present, wherein, after the first neighbourhood relationship (7) has been determined, the second stator module (62) is defined as the transmission stator module (10) and a third stator module (63) of the communication path (50) is defined as the reception stator module (14) and the method is repeated until a stator module (75) of the communication path (50) that terminates the communication path (50) is defined as the reception stator module (14) and, consequently, no further neighbourhood relationships (30) between stator modules (60) of the communication path (50) may be determined.

6. Method according to Claim 5, wherein the planar drive system (1) comprises a plurality of communication paths (50) each constituting a stator module unit (80), wherein in each case at least two stator modules (60) of different stator module units (80) comprise outer edges (100) facing one another and, as a result, there is a spatial unit neighbourhood relationship (79) between the at least two stator module units (80), wherein, in order to determine the location and the position of the unit neighbourhood relationships (79), one stator module unit (80) is defined as the transmission stator module unit and another stator module unit (80) is defined as the reception stator module unit, wherein a second control signal is output in such a way that in the transmission stator module unit there is successive energization of the first conductor strips (31) and/or the further first conductor strips (32) of the conductor strips (20) in a first edge region (25) and/or a further first edge region (26) of the transmission stator modules (10) of the transmission stator module unit for which no neighbourhood relationship (30) was determined within the communication path (50), wherein a second positive detection signal is determined if a magnetic field triggered by the second control signal is measured by means of the magnetic field sensors (15) of the reception stator modules (14) of the reception stator module unit and the unit neighbourhood relationship (79) between the transmission stator module unit and the reception stator module unit of the stator module units (80) is thus determined, and wherein, if no magnetic field triggered by the second control signal is measured by means of the magnetic field sensors (15) of the reception stator module unit, no unit neighbourhood relationship (79) between the transmission stator module unit and the reception stator module unit of the stator module units (80) is determined, wherein the method is repeated until all unit neighbourhood relationships (79) between the stator module units (80) of the planar drive system (1) have been determined.

7. Method according to Claim 6, wherein the second control signal comprises the fact that there is simultaneous energization of all first conductor strips (31) and/or further first conductor strips (32) of the conductor strips (20) in a first edge region (25) and/or in the further first edge regions (26) of the transmission stator modules (10) of the transmission stator module unit for which no neighbourhood relationship (30) was determined within the communication path (50).

8. Method according to any of Claims 1 to 3, wherein the first control signal comprises energizing at least one conductor strip (20) in a first edge region (25) of the transmission stator module (10), wherein the magnetic field sensors (15) are assigned at least partly to edge regions (28) of the stator modules (60), and wherein on the basis of the strength of the magnetic field measured by means of the magnetic field sensors (15) the positive first detection signal is determined and the neighbourhood relationship (30), and also a location and position of the reception stator module (14) relative to the transmission stator module (10), is thus ascertained.

9. Method according to Claim 8, wherein the first control signal comprises energizing at least one first conductor strip (31) of the conductor strips (20) in a first edge region (25) of the transmission stator module (10), wherein the first positive detection signal is determined if a magnetic field triggered by the first control signal is measured by means of the magnetic field sensors (15) of the reception stator module (14) and the neighbourhood relationship (30) is thus determined as the first neighbourhood relationship (7), and wherein, if no magnetic field triggered by the first control signal is measured by means of the magnetic field sensors (15) of the reception stator module (14), no first neighbourhood relationship (7) between the transmission stator module (10) and the reception stator module (14) of the stator modules (60) is determined, wherein, after the first neighbourhood relationship (7) has been determined or has not been determined, further first control signals are output successively in such a way that further first conductor strips (32) of the conductor strips (20) in further first edge regions (26) of the transmission stator module (10) are energized until either further neighbourhood relationships (30) with further reception stator modules (14) have been determined or have not been determined or no further first edge regions (26) of the transmission stator module (10) are present.

10. Method according to Claim 8 or 9, wherein the planar drive system (1) comprises a plurality of stator modules (60), wherein one stator module (60) functions as the transmission stator module (10) and all further stator modules (60) function simultaneously as reception stator modules (14), wherein the first control signal comprises energizing at least one first conductor strip (31) of the conductor strips (20) in a first edge region (25) of the transmission stator module (10), wherein the first positive detection signal is determined if a magnetic field triggered by the first control signal is measured by means of the magnetic field sensors (15) of one of the reception stator modules (14) and the neighbourhood relationship (30) is thus determined as the first neighbourhood relationship (7) between the transmission stator module (10) and the reception stator module (14) measuring the magnetic field, and wherein, if no magnetic field triggered by the first control signal is measured by means of the magnetic field sensors (15) of the reception stator modules (14), the outer edge assigned to the first edge region (25) of the transmission stator module (10) is determined as an outer boundary of the planar drive system (1).

11. Method according to Claim 10, wherein the method is initially repeated for the further first edge regions (26) of the transmission stator module (10) until all neighbourhood relationships (30) or outer boundaries have been determined for the transmission stator module (10), wherein another stator module (60) of the planar drive system (1) then functions as the transmission stator module (10) and all further stator modules (60) function simultaneously as reception stator modules (14), and the method is repeated until all neighbourhood relationships (30) or outer boundaries have been determined for all stator modules.

12. Method according to Claim 11, wherein the determined neighbourhood relationships (30) or outer boundaries of the planar drive system (1) are stored in parallel in a reference table and the neighbourhood relationships (30) or outer edges are determined only for the stator modules (60) whose neighbourhood relationships (30) or outer edges have not yet been determined or result from the determined neighbourhood relationships (30) or outer edges of other stator modules (60).

13. Control unit (5), comprising a computing unit (18) and a communication connection (19), wherein control signals may be output via the communication connection (19) and detection signals may be received via the communication connection (19), wherein the computing unit (18) is designed to carry out one of the methods in Claims 1 to 12.

14. Computer program, comprising program code which, when executed on a computing unit (18), causes the computing unit (18) to carry out the method according to any of Claims 1 to 12.

15. Planar drive system (1) comprising a plurality of stator modules (60), at least one rotor (2) and the control unit (5) according to Claim 13.

## Revendications

1. Procédé de configuration d'un système d'entraînement planaire (1), le système d'entraînement planaire (1) possédant plusieurs modules de stator (60) adjacents les uns aux autres destinés à entraîner au moins un rotor (2), au moins deux modules de stator (60) possédant respectivement des bords extérieurs (100) se faisant mutuellement face et produisant ainsi une relation de voisinage spatiale (30) entre les au moins deux modules de stator (60), les modules de stator (60) possédant respectivement des bandes conductrices (20) destinées à générer un champ magnétique et respectivement des capteurs de champ magnétique (15) destinés à détecter un champ magnétique, **caractérisé par** les étapes suivantes :
- délivrance d'un premier signal de commande dans une première étape de délivrance à au moins un module de stator d'émission (10) des modules de stator (60), le premier signal de commande incluant qu'au moins une bande conductrice (20) dans le module de stator d'émission (10) doit être alimentée électriquement ;
- réception d'un premier signal de détection positif d'un module de stator de réception (14) des modules de stator (60), le premier signal de détection positif incluant qu'au moins un capteur de champ magnétique (15) du module de stator de réception (14) a identifié un champ magnétique ;
- identification d'une relation de voisinage (30) entre le module de stator d'émission (10) et le module de stator de réception (14) dans une première étape d'identification (210), le premier signal de commande et le premier signal de détection positif étant pris en compte lors de l'identification de la relation de voisinage (30).

2. Procédé selon la revendication 1, le procédé étant répété jusqu'à ce que toutes les relations de voisinage (30) entre tous les modules de stator (60) soient identifiées, les modules de stator (60) étant configurés ou fonctionnant à la fois comme modules de stator d'émission (10) et modules de stator de réception (14).

3. Procédé selon l'une des revendications précédentes, les modules de stator (60) étant reliés informatiquement entre eux par le biais d'un bus de communication, le premier signal de commande et le premier signal de détection positif faisant partie d'un télégramme ou de plusieurs télégrammes du bus de communication.

4. Procédé selon la revendication 3, certains ou une pluralité de modules de stator (60) du système d'entraînement planaire (1) étant respectivement connectés à un trajet de communication (50) du bus de communication en une topologie en ligne, le trajet de communication (50) possédant une liaison de communication ininterrompue et les modules de stator (60) d'un trajet de communication (50) formant une zone (16) fermée dans l'espace avec une surface de stator (17) continue du système d'entraînement planaire (1), le système d'entraînement planaire (1) pouvant posséder un ou plusieurs trajets de communication (50) du bus de communication.

5. Procédé selon la revendication 4, pour chaque trajet de communication (50) du bus de communication, les relations de voisinage (30) au sein du trajet de communication (50) étant identifiées de telle sorte qu'un premier module de stator (61) du trajet de communication (50) est tout d'abord défini en tant que module de stator d'émission (10) et un deuxième module de stator (62) du trajet de communication (50) est tout d'abord défini en tant que module de stator de réception (14), le premier signal de commande incluant d'alimenter électriquement au moins une première bande conductrice (31) des bandes conductrices (20) dans une première zone de bordure (25) du module de stator d'émission (10), le premier signal de détection positif étant identifié lorsqu'un champ magnétique déclenché par le premier signal de commande est mesuré au moyen des capteurs de champ magnétique (15) du module de stator de réception (14) et la relation de voisinage (30) est ainsi identifiée en tant que première relation de voisinage (7) le long d'une première zone de bordure (25) du module de stator d'émission (10) entre le module de stator d'émission (10) et le module de stator de réception (14) des modules de stator (60) et lorsqu'aucun champ magnétique déclenché par le premier signal de commande n'est mesuré au moyen des capteurs de champ magnétique (15) du module de stator de réception (14), aucune première relation de voisinage (7) le long de la première zone de bordure (25) du module de stator d'émission (10) entre le module de stator d'émission (10) et le module de stator de réception (14) des modules de stator (60) n'étant identifiée, des premiers signaux de commande supplémentaires étant délivrés les uns après les autres dans le cas d'une non-identification de la première relation de voisinage (7), de telle sorte que des premières bandes conductrices supplémentaires (32) des bandes conductrices (20) dans des premières zones de bordure supplémentaires (26) du module de stator d'émission (10) sont alimentées électriquement jusqu'à ce qu'une première relation de voisinage (7) entre le module de stator d'émission (10) et le module de stator de réception (14) ait été identifiée ou qu'aucune première zone de bordure supplémentaire (26) du module de stator d'émission (10) ne soit plus présente, après l'identification de la première relation de voisinage (7), le deuxième module de stator (62) étant défini en tant que module de stator d'émission (10) et un troisième module de stator (63) du trajet de communication (50) étant défini en tant que module de stator de réception (14) et le procédé étant répété jusqu'à ce qu'un module de stator (75) du trajet de communication (50), qui termine le trajet de communication (50), soit défini en tant que module de stator de réception (14) et qu'aucune relation de voisinage supplémentaire (30) entre les modules de stator (60) du trajet de communication (50) ne puisse ainsi être identifiée.

6. Procédé selon la revendication 5, le système d'entraînement planaire (1) possédant plusieurs trajets de communication (50), lesquels forment respectivement une unité de module de stator (80), au moins deux modules de stator (60) d'unités de module de stator (80) différentes possédant respectivement des bords extérieurs (100) se faisant mutuellement face et produisant ainsi une relation de voisinage d'unité (79) spatiale entre les au moins deux unités de module de stator (80), une unité de module de stator (80) étant défini en tant qu'unité de module de stator d'émission et une autre unité de module de stator (80) en tant qu'unité de module de stator de réception en vue d'identifier la situation et la position des relations de voisinage d'unité (79), un deuxième signal de commande étant délivré de telle sorte que dans l'unité de module de stator d'émission, les premières bandes conductrices (31) et/ou les premières bandes conductrices supplémentaires (32) des bandes conductrices (20), pour lesquelles aucune relation de voisinage (30) n'a été identifiée au sein du trajet de communication (50), sont alimentées électriquement les unes après les autres dans une première zone de bordure (25) et/ou une première zone de bordure supplémentaire (26) des modules de stator d'émission (10) de l'unité de module de stator d'émission, un deuxième signal de détection positif étant identifié lorsqu'un champ magnétique déclenché par le deuxième signal de commande est mesuré au moyen des capteurs de champ magnétique (15) des modules de stator de réception (14) de l'unité de module de stator de réception et la relation de voisinage d'unité (79) entre l'unité de module de stator d'émission et l'unité de module de stator de réception des unités de module de stator (80) est ainsi identifiée et lorsqu'aucun champ magnétique déclenché par le deuxième signal de commande n'est mesuré au moyen des capteurs de champ magnétique (15) de l'unité de module de stator de réception, aucune relation de voisinage d'unité (79) n'étant identifiée entre l'unité de module de stator d'émission et l'unité de module de stator de réception des unités de module de stator (80), le procédé étant répété jusqu'à ce que toutes les relations de voisinage d'unité (79) entre les unités de module de stator (80) du système d'entraînement planaire (1) aient été identifiées.

7. Procédé selon la revendication 6, le deuxième signal de commande incluant que toutes les premières bandes conductrices (31) et/ou premières bandes conductrices supplémentaires (32) des bandes conductrices (20) dans une première zone de bordure (25) et/ou dans les premières zones de bordure supplémentaires (26) des modules de stator d'émission (10) de l'unité de module de stator d'émission, pour lesquelles aucune relation de voisinage (30) n'a été identifiée au sein du trajet de communication (50), sont alimentées électriquement simultanément.

8. Procédé selon l'une des revendications 1 à 3, le premier signal de commande incluant d'alimenter électriquement au moins une bande conductrice (20) dans une première zone de bordure (25) du module de stator d'émission (10), les capteurs de champ magnétique (15) étant associés au moins partiellement à des zones de bordure (28) des modules de stator (60) et le premier signal de détection positif étant identifié à l'aide de l'intensité du champ magnétique mesuré au moyen des capteurs de champ magnétique (15) et ainsi la relation de voisinage (30) ainsi qu'une situation et une position du module de stator de réception (14) par rapport au module de stator d'émission (10) étant déterminées.

9. Procédé selon la revendication 8, le premier signal de commande incluant d'alimenter électriquement au moins une première bande conductrice (31) des bandes conductrices (20) dans une première zone de bordure (25) du module de stator d'émission (10), le premier signal de détection positif étant identifié lorsqu'un champ magnétique déclenché par le premier signal de commande est mesuré au moyen des capteurs de champ magnétique (15) du module de stator de réception (14) et la relation de voisinage (30) est ainsi identifiée en tant que première relation de voisinage (7) et lorsqu'aucun champ magnétique déclenché par le premier signal de commande n'est mesuré au moyen des capteurs de champ magnétique (15) du module de stator de réception (14), aucune première relation de voisinage (7) n'étant identifiée entre le module de stator d'émission (10) et le module de stator de réception (14) des modules de stator (60), des premiers signaux de commande supplémentaires étant délivrés les uns après les autres après l'identification ou la non-identification de la première relation de voisinage (7) de telle sorte que des premières bandes conductrices supplémentaires (32) des bandes conductrices (20) dans des premières zones de bordure supplémentaires (26) du module de stator d'émission (10) sont alimentées électriquement jusqu'à ce que soit des relations de voisinage supplémentaires (30) par rapport à des modules de stator de réception supplémentaires (14) soient identifiées ou non identifiées, soit qu'aucune première zone de bordure supplémentaire (26) du module de stator d'émission (10) ne soit plus présente.

10. Procédé selon la revendication 8 ou 9, le système d'entraînement planaire (1) possédant une pluralité de modules de stator (60), un module de stator (60) fonctionnant comme module de stator d'émission (10) et tous les autres modules de stator (60) fonctionnant simultanément comme modules de stator de réception (14), le premier signal de commande incluant d'alimenter électriquement au moins une première bande conductrice (31) des bandes conductrices (20) dans une première zone de bordure (25) du module de stator d'émission (10), le premier signal de détection positif étant identifié lorsqu'un champ magnétique déclenché par le premier signal de commande est mesuré au moyen des capteurs de champ magnétique (15) de l'un des modules de stator de réception (14) et la relation de voisinage (30) est ainsi identifiée en tant que première relation de voisinage (7) entre le module de stator d'émission (10) et le module de stator de réception (14) qui mesure le champ magnétique et lorsqu'aucun champ magnétique déclenché par le premier signal de commande n'est mesuré au moyen des capteurs de champ magnétique (15) des modules de stator de réception (14), le bord extérieur associé à la première zone de bordure (25) du module de stator d'émission (10) étant identifié comme limite extérieure du système d'entraînement planaire (1).

11. Procédé selon la revendication 10, le procédé étant tout d'abord répété pour les premières zones de bordure supplémentaires (26) du module de stator d'émission (10) jusqu'à ce que toutes les relations de voisinage (30) ou limites extérieures soient identifiées pour le module de stator d'émission (10), un autre module de stator (60) du système d'entraînement planaire (1) fonctionnant alors comme module de stator d'émission (10) et tous les modules de stator supplémentaires (60) fonctionnant en même temps comme modules de stator de réception (14), et le procédé étant répété jusqu'à ce que toutes les relations de voisinage (30) ou limites extérieures soient identifiées pour tous les modules de stator.

12. Procédé selon la revendication 11, les relations de voisinage (30) ou les limites extérieures du système d'entraînement planaire (1) étant stockées en parallèle dans une table de référence et l'identification des relations de voisinage (30) ou des limites extérieures n'étant encore effectuée que pour les modules de stator (60) dont les relations de voisinage (30) ou les limites extérieures n'ont pas encore été identifiées ou résultent des relations de voisinage (30) ou des limites extérieures identifiées d'autres modules de stator (60).

13. Unité de commande (5), possédant une unité de calcul (18) et un port de communication (19), des signaux de commande pouvant être délivrés par le biais du port de communication (19) et des signaux de détection pouvant être reçus par le biais du port de communication (19), l'unité de calcul (18) étant conçue pour mettre en œuvre l'un des procédés selon les revendications 1 à 12.

14. Programme informatique, comprenant un code de programme qui, exécuté sur une unité de calcul (18), amène l'unité de calcul (18) à mettre en œuvre le procédé selon l'une des revendications 1 à 12.

15. Système d'entraînement planaire (1) comprenant plusieurs modules de stator (60), au moins un rotor (2) et l'unité de commande (5) selon la revendication 13.
